# EUROPÄISCHE PATENTSCHRIFT

(11) **EP 2 336 213 B1**
(45) Veröffentlichungstag und Bekanntmachung des Hinweises auf die Patenterteilung: **01.08.2012**
(21) Anmeldenummer: 09178262.3
(22) Anmeldetag: 08.12.2009
(51) Int. Cl.: C08G 59/40

(54) **Niedrigviskose Epoxidharz-Zusammensetzung mit geringem Blushing**
Low viscosity epoxide resin compound with low blushing
Composition de résine époxy peu visqueuse à formation de voile moindre

(43) Veröffentlichungstag der Anmeldung: 22.06.2011
(73) Patentinhaber: Sika Technology AG, 6340 Baar (CH)
(72) Erfinder: Burckhardt, Urs, 8049, Zürich (CH); Stadelmann, Ursula, 8046, Zürich (CH); Bütikofer, Pierre-André, 8304, Wallisellen (CH)
(74) Vertreter: Sika Patent Attorneys

(56) Entgegenhaltungen:
- GB-A- 960 236
- US-A- 3 331 795
- US-A1- 2007 224 362

## Beschreibung

### Technisches Gebiet

Die Erfindung betrifft das Gebiet der Epoxidharz-Zusammensetzungen, sowie deren Verwendungen, insbesondere für Beschichtungen, Beläge und Anstriche.

### Stand der Technik

Zweikomponentige Epoxidharz-Zusammensetzungen und deren Anwendung als Beschichtungen sind bekannt. Sie bestehen üblicherweise aus einer Harz-Komponente, welche ein Epoxidharz enthält, und einer Härter-Komponente, welche mit Epoxidgruppen reaktive Verbindungen aufweist, üblicherweise vorwiegend Polyamine. Die beiden Komponenten werden zur Anwendung vermischt und härten bei Umgebungstemperatur aus. Die Systeme nach dem Stand der Technik weisen einige in der Praxis nachteilige Eigenschaften auf.

Epoxidharze, insbesondere die am weitesten verbreiteten, auf Bisphenolen beruhenden Typen, sind zähflüssige Flüssigkeiten oder Feststoffe. Zur Verwendung in zweikomponentigen Epoxidharz-Zusammensetzungen für Beschichtungen werden sie üblicherweise verdünnt, um eine gute Mischbarkeit der beiden Komponenten und eine gute Verarbeitbarkeit bei Umgebungstemperaturen zu erreichen. Zur Verdünnung werden vielfach niedrigviskose Epoxide, sogenannte Epoxid-Reaktivverdünner, eingesetzt. Diese sind aber kostspielig, wirken oft stark reizend und können die Festigkeit des ausgehärteten Systems in unerwünschter Weise herabsetzen. Die Epoxidharze können auch mit organischen Lösemitteln verdünnt werden. Bei diesen handelt es sich aber üblicherweise um leichtflüchtige organische Verbindungen (VOC; Volatile Organic Compund), welche während und nach der Verarbeitung der Epoxidharz-Zusammensetzung durch Verdampfen in die Atmosphäre gelangen und für Mensch und Umwelt eine Gefahr darstellen, da sie oft leicht entzündlich sind, Geruchsemissionen verursachen und Übelkeit, Gesundheitsschäden und Umweltschäden hervorrufen können.

Die als Härter üblicherweise eingesetzten Polyamine weisen aufgrund ihres Gehalts an primären Aminogruppen den grossen Nachteil auf, dass sie mit Kohlendioxid-Gas (CO₂) aus der Luft in Kombination mit Feuchtigkeit stabile Carbonat- und Carbamatsalze bilden können. Härter auf Basis solcher Polyamine können deshalb meist nicht offen an der Luft gelagert werden, da sich sonst in den Gebinden Krusten bilden. Andererseits können solche Härter auch bei ihrer Anwendung in einer Beschichtung - nach dem Einmischen ins Epoxidharz und während der Aushärtung - CO₂ aufnehmen, wodurch unerwünschte Effekte auftreten, wie eine klebrige Oberfläche mit Trübungen oder Flecken bis hin zu unvollständiger Aushärtung. Diese Effekte werden vom Fachmann als "Blushing" bezeichnet. Zur Unterdrückung von Krustenbildung und Blushing und gleichzeitig zur Verdünnung werden Epoxidharz-Zusammensetzungen oft mit erheblichen Mengen an Benzylalkohol versetzt, wodurch aber wiederum Nachteile entstehen. Benzylalkohol ist zwar vergleichsweise geruchsarm und wenig flüchtig, stellt aber trotzdem ein VOC dar, wodurch Benzylalkohol-haltige Zusammensetzungen nicht als VOC-frei deklariert werden können. Epoxidharz-Zusammensetzungen mit einem hohen Gehalt an Benzylalkohol neigen zudem zur Bildung von Blasen, insbesondere auf porösen Untergründen, haben eine verminderte Abriebfestigkeit und schneiden bei Emissions-Tests in Innenräumen schlecht ab. Zur Unterdrückung von Blushing ebenfalls eingesetzt werden Alkylphenole wie Nonylphenol, welche aber aus Toxizitätsgründen problematisch sind.

Sekundäre Aminogruppen zeigen im Allgemeinen keine spontane Reaktion mit CO₂, bzw. ihre Carbonate und Carbamate sind nicht stabil. Polyamine mit vorwiegend sekundären Aminogruppen führen deshalb in Epoxidharz-Zusammensetzungen kaum zu Blushing. Nur sekundäre Aminogruppen aufweisende Polyamine werden jedoch selten eingesetzt, da sie meist aufwendig in der Herstellung sind und zu langen Aushärtungszeiten führen. Oft verwendet werden hingegen mit Diepoxiden adduktierte Polyamine, sowie sogenannte Polyamidoamine. Beide weisen neben vorwiegend sekundären auch primäre Aminogruppen auf und zeigen kaum Blushing; sie sind jedoch meist so hochviskos, dass sie verdünnt werden müssen, was wiederum die erwähnten Nachteile mit sich bringt.

### Darstellung der Erfindung

Aufgabe der vorliegenden Erfindung ist es daher, zweikomponentige Epoxidharz-Zusammensetzungen zur Verfügung zu stellen, deren Harz-Komponente eine gut handhabbare Viskosität aufweist, und die bei flächiger Anwendung kaum Blushing-Effekte zeigen und zu qualitativ guten Beschichtungen aushärten.

Überraschenderweise wurde gefunden, dass zweikomponentige Epoxidharz-Zusammensetzungen nach Anspruch 1 diese Aufgabe lösen. Einerseits ist die Harz-Komponente überraschend niedrigviskos, da der Aldehyd überraschenderweise sehr gut verträglich ist mit dem Epoxidharz und dieses gut verdünnt, insbesondere wenn der Aldehyd bei Raumtemperatur flüssig ist. Andererseits treten mit der erfindungsgemässen Zusammensetzung auch bei flächiger Anwendung kaum Blushing-Effekte auf, da der Aldehyd den Gehalt an primären Aminogruppen beim Vermischen der Komponenten durch chemische Reaktion soweit vermindert, dass diese mit CO₂ nicht mehr merklich reagieren. Dabei wird der Aldehyd kovalent in der Zusammensetzung gebunden. Bei der Aushärtung entstehen weitgehend klare, glänzende und klebefreie Filme mit ausgezeichneten mechanischen Eigenschaften. Die Erfindung ermöglicht somit insbesondere hochwertige Epoxidharz-Beschichtungen, welche keinen oder einen deutlich reduzierten Gehalt an VOC und Epoxid-Reaktivverdünnern aufweisen.

Weitere vorteilhafte Ausführungsformen der Erfindung sind Gegenstand von weiteren unabhängigen und abhängigen Ansprüchen.

### Wege zur Ausführung der Erfindung

Gegenstand der Erfindung ist eine zweikomponentige Epoxidharz-Zusammensetzung, bestehend aus
einer Harz-Komponente **K1**, welche mindestens ein Epoxidharz und mindestens einen Aldehyd enthält, und
einer Härter-Komponente **K2**, welche mindestens ein Polyamin **A1** mit mindestens einer primären Aminogruppe enthält.

Propanal, 2-Methylpropanal, Butanal, 2-Methyl¬butanal, 2-Ethylbutanal, Pentanal, Pivalaldehyd, 2-Methylpentanal, 3-Methyl¬pentanal, 4-Methyl-pentanal, 2,3-Dimethylpentanal, Hexanal, 2-Ethyl-hexanal, Heptanal, Octanal, Nonanal, Decanal, Undecanal, 2-Methyl-un¬deca¬nal, Do-decanal, Methoxy¬acet¬aldehyd, Cyclopropan¬carboxaldehyd, Cyclo¬pen¬tan¬carboxaldehyd, Cyclo¬hexan¬carbox¬aldehyd, 2,2-Dimethyl-3-phenylpropa¬nal; 1-Naphthaldehyd, Benzaldehyd, substituierte Benzaldehyde, insbesondere die isomeren Tolualdehyde, Salicylaldehyd und m-Phenoxy-benzaldehyd, Zimtaldehyd und Aldehyden der Formel (II) 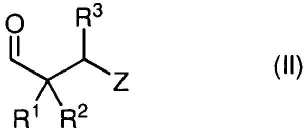 wobei R¹ und R²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen stehen, der Teil eines, gegebenenfalls substituierten, carbocyclischen Rings mit 5 bis 8, bevorzugt 6, C-Atomen ist;
R³ für ein Wasserstoffatom oder für eine Arylalkyl- oder Cycloalkyl- oder Alkylgruppe mit 1 bis 12 C-Atomen, insbesondere für ein Wasserstoffatom, steht; und
Z für eine Ester-, Ether-, tertiäre Amino- oder Amidogruppe mit bis zu 31 C-Atomen steht, wobei diese gegebenenfalls zusätzliche Ether-Sauerstoffe aufweist.

Bevorzugt weist die Harz-Komponente **K1** einen Gehalt an Aldehyd von mindestens 1 Gewichts-%, bevorzugt mindestens 3 Gewichts-%, auf.

Die zweikomponentige Epoxidharz-Zusammensetzung ist insbesondere geeignet als Beschichtung.

Mit "Poly" beginnende Substanznamen wie Polyamin, Polyol oder Polyepoxid bezeichnen im vorliegenden Dokument Substanzen, die formal zwei oder mehr der in ihrem Namen vorkommenden funktionellen Gruppen pro Molekül enthalten. Als "Diepoxid" werden Verbindungen mit zwei Epoxidgruppen bezeichnet.

Als "Epoxidgruppe" oder "Epoxygruppe" wird im vorliegenden Dokument das Strukturelement 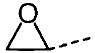 bezeichnet.

Die gestrichelten Linien in den Formeln in diesem Dokument stellen jeweils die Bindung zwischen einem Substituenten und dem zugehörigen Molekülrest dar.

Als "Glycidylether" wird im vorliegenden Dokument ein Ether von 2,3-Epoxy-1-propanol (Glycidol) bezeichnet.

Die Abkürzung "EEW" steht im vorliegenden Dokument für "Epoxid-Equivalent-Gewicht".

Als "primäre" Aminogruppe wird im vorliegenden Dokument eine NH₂-Gruppe bezeichnet, die an einen organischen Rest gebunden ist, und als "sekundäre" Aminogruppe wird eine NH-Gruppe bezeichnet, die an zwei organische Reste, welche auch gemeinsam Teil eines Rings sein können, gebunden ist.

Als "Raumtemperatur" wird im vorliegenden Dokument eine Temperatur von 23 °C bezeichnet.

Der Begriff "Verdünnen" bezeichnet im vorliegenden Dokument die Herabsetzung der Viskosität einer Flüssigkeit.

Die fett markierten Bezeichnungen wie **K1, K2, A1, A2, ALD** oder dergleichen im vorliegenden Dokument dienen lediglich für das bessere Leseverständnis und Identifizierung.

Die Harz-Komponente **K1** der zweikomponentigen Epoxidharz-Zusammensetzung enthält mindestens ein Epoxidharz.

Als Epoxidharz sind in der Epoxychemie übliche Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Glasübergangstemperatur auf, welche üblicherweise unterhalb von 25 °C liegt, im Gegensatz zu den sogenannten Festharzen, welche eine Glasübergangstemperatur oberhalb von 25 °C aufweisen und sich zu bei 25 °C schüttfähigen Pulvern zerkleinern lassen.

In einer Ausführungsform handelt es sich beim Flüssigharz um ein aromatisches Polyepoxid. Dafür geeignet sind beispielsweise Flüssigharze der Formel (I), 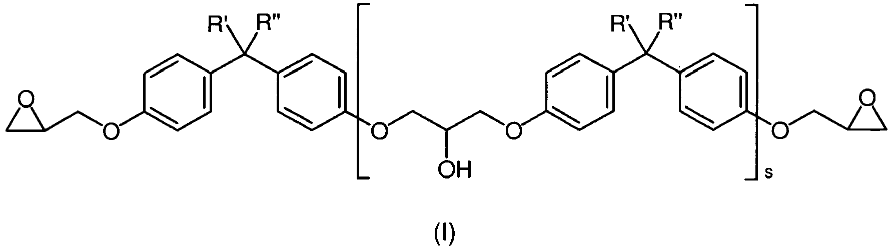 wobei R' und R" unabhängig voneinander jeweils für ein Wasserstoffatom oder für eine Methylgruppe stehen, und s im Mittel für einen Wert von 0 bis 1 steht. Bevorzugt sind solche Flüssigharze der Formel (I), bei denen der Index s im Mittel für einen Wert von kleiner als 0.2 steht.

Bei den Flüssigharzen der Formel (I) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Ein Bisphenol-A-Flüssigharz weist dementsprechend Methylgruppen, ein Bisphenol-F-Flüssigharz Wasserstoffatome und ein Bisphenol-A/F-Flüssigharz sowohl Methylgruppen als auch Wasserstoffatome als R' und R" in Formel (I) auf. Im Fall von Bisphenol-F können auch Stellungsisomere vorhanden sein, insbesondere abgeleitet von 2,4'- und 2,2'-Hydroxyphenylmethan.

Weitere geeignete aromatische Flüssigharze sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M).

Als Epoxidharz eignet sich auch ein aliphatisches oder cycloaliphatisches Polyepoxid, wie beispielsweise
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol-A-, -F- oder -A/F-Festharz, welches ähnlich aufgebaut ist wie die bereits genannten Flüssigharze der Formel (I), aber anstelle des Index s einen Wert von 2 bis 12 aufweist, und eine Glasübergangstemperatur oberhalb von 25 °C aufweist.

Als Epoxidharz eignen sich schliesslich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt sind Flüssigharze auf der Basis eines Bisphenols, insbesondere auf der Basis von Bisphenol-A, Bisphenol-F- oder Bisphenol-A/F, wie sie kommerziell beispielsweise von Dow, Huntsman und Hexion erhältlich sind, wobei diese gegebenenfalls in Kombination mit Bisphenol A-Festharz oder Bisphenol-F-Novolak-Epoxidharz vorhanden sind.

Das Epoxidharz kann einen Reaktivverdünner, insbesondere einen Epoxid-Reaktivverdünner, enthalten. Als Epoxid-Reaktivverdünner geeignet sind niedrigviskose Mono- und Polyepoxide, wie beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether. Die Zugabe eines Reaktivverdünners zum Epoxidharz bewirkt eine Reduktion der Viskosität, sowie - im ausgehärteten Zustand der Epoxidharz-Zusammensetzung - eine Reduktion der Glasübergangstemperatur und der mechanischen Werte.

Bevorzugt enthält die Harz-Komponente **K1** nur einen geringen Gehalt an Epoxid-Reaktivverdünner, oder ist insbesondere frei von Epoxid-Reaktivverdünner.

Die Harz-Komponente **K1** der zweikomponentigen Epoxidharz-Zusammensetzung enthält weiterhin mindestens einen Aldehyd wie er vorhergehend beschreiben worden ist.

Als Aldehyd insbesondere geeignet sind einerseits bei Raumtemperatur flüssige Aldehyde.

Bevorzugt stehen in den Aldehyden der Formel (II) R¹ und R² jeweils für einen Methylrest.

Bevorzugt steht R³ für ein Wasserstoffatom.

Bevorzugt steht Z für einen Rest der Formel (III) oder (IV), 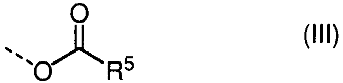 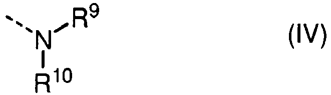 wobei
- R⁵: entweder für ein Wasserstoffatom steht, oder für einen linearen oder verzweigten Alkylrest mit 1 bis 30 C-Atomen, gegebenenfalls mit cyclischen Anteilen und gegebenenfalls mit mindestens einem Heteroatom, insbesondere Sauerstoff in der Form von Ether-, Carbonyl- oder Ester-Gruppen, steht, oder für einen einfach oder mehrfach ungesättigten, linearen oder verzweigten Kohlenwasserstoffrest mit 5 bis 30 C-Atomen steht, oder für einen, gegebenenfalls substituierten, aromatischen oder heteroaromatischen 5- oder 6-gliedrigen Ring steht; und
- R⁹ und R¹⁰: entweder unabhängig voneinander jeweils für einen einwertigen aliphatischen, cycloaliphatischen oder arylaliphatischen Rest mit 1 bis 20 C-Atomen, welcher gegebenenfalls Heteroatome in der Form von Ether-Sauerstoff oder tertiärem Amin-Stickstoff enthält, stehen, oder zusammen für einen zweiwertigen aliphatischen Rest mit 3 bis 20 C-Atomen, der Teil eines, gegebenenfalls substituierten, heterocyclischen Rings mit 5 bis 8, bevorzugt 6, Ringatomen ist und neben dem Stickstoffatom gegebenenfalls weitere Heteroatome in der Form von Ether-Sauerstoff oder tertiärem Amin-Stickstoff enthält, stehen.

Bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom, oder für einen einfach oder mehrfach ungesättigten, linearen oder verzweigten Kohlenwasserstoffrest mit 6 bis 30, insbesondere mit 11 bis 30, C-Atomen.

Besonders bevorzugt steht R⁵ für einen linearen oder verzweigten Alkylrest mit 6 bis 30, insbesondere mit 11 bis 30, C-Atomen, gegebenenfalls mit cyclischen Anteilen und gegebenenfalls mit mindestens einem Heteroatom.

Bevorzugt stehen R⁹ und R¹⁰ jeweils unabhängig voneinander für eine Methyl-, Ethyl-, Propyl-, Isopropyl-, Butyl-, Isobutyl-, 2-Ethylhexyl-, Cyclohexyl-, Benzyl- oder Alkoxyethyl-Gruppe, oder sie bilden zusammen - unter Einbezug des Stickstoffatoms - einen Ring, insbesondere einen Pyrrolidin-, Piperidin-, Morpholin- oder N-Alkylpiperazin-Ring, wobei dieser Ring gegebenenfalls substituiert ist. Besonders bevorzugt stehen R⁹ und R¹⁰ jeweils unabhängig voneinander für eine Benzyl- oder Methoxyethyl-Gruppe, oder bilden zusammen unter Einbezug des Stickstoffatoms einen Morpholinring.

Bevorzugt sind Aldehyde der Formel (II), welche bei Raumtemperatur flüssig sind.

Die meisten der genannten Aldehyde sind bei Raumtemperatur flüssig. Es hat sich aber herausgestellt, dass auch bei Raumtemperatur feste Aldehyde die Harz-Komponente **K1** sehr gut verdünnen, sofern diese über den Schmelzpunkt des jeweiligen Aldehyds erwärmt wird.

Aldehyde der Formel (II), welche als Rest Z einen Rest der Formel (III) aufweisen, stellen Ester von aliphatischen, cycloaliphatischen oder arylaliphatischen 2,2-disubstituierten 3-Hydroxyaldehyden, wie insbesondere 2,2-Dimethyl-3-hydroxypropanal, mit geeigneten Carbonsäuren dar, wobei als Carbonsäuren insbesondere die Folgenden geeignet sind: gesättigte aliphatische Carbonsäuren, wie insbesondere Ameisensäure, Essigsäure, Propionsäure, Buttersäure, Isobuttersäure, Valeriansäure, Capronsäure, 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl, sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden. Bevorzugt sind Carbonsäuren mit mindestens 7 C-Atomen, insbesondere solche mit 12 bis 31 C-Atomen, insbesondere Laurinsäure, Myristinsäure, Palmitinsäure, Stearinsäure und Ölsäure. Besonders bevorzugt ist Laurinsäure.

Bevorzugt ist der Aldehyd ausgewählt aus der Gruppe bestehend aus 2-Ethylbutanal, Pentanal, Pivalaldehyd, 2-Methylpentanal, 3-Methylpentanal, 4-Methylpentanal, 2,3-Dimethylpentanal, Hexanal, 2-Ethyl-hexanal, Heptanal, Octanal, Methoxyacetaldehyd, 2,2-Dimethyl-3-phenylpropanal, Benzaldehyd, 1-Naphthaldehyd, Salicylaldehyd und Aldehyde der Formel (II), insbesondere 3-Acetoxy-2,2-dimethylpropanal, 2,2-Dimethyl-3-lauroyloxypropanal, 2,2-Dimethyl-3-(N-morpholino)-propanal und 2,2-Dimethyl-3-bis-(methoxyethyl)-amino-propanal.

Besonders bevorzugt ist der Aldehyd ausgewählt aus der Gruppe bestehend aus Benzaldehyd, Salicylaldehyd, 2,2-Dimethyl-3-phenylpropanal, 3-Acetoxy-2,2-dimethylpropanal, 2,2-Dimethyl-3-lauroyloxypropanal und 2,2-Dimethyl-3-(N-morpholino)-propanal.

Als Aldehyd speziell bevorzugt sind Aldehyde der Formel (II), welche als Rest Z einen Rest der Formel (III) aufweisen, worin R⁵ 11 bis 30 C-Atome, insbesondere 11 bis 20 C-Atome, aufweist. Solche Aldehyde werden im Folgenden auch Aldehyde **ALD** genannt. Bei den Aldehyden **ALD** handelt es sich um geruchsfreie Substanzen. Unter einer "geruchsfreien" Substanz wird eine Substanz verstanden, die für die meisten menschlichen Individuen nicht riechbar ist, die also keinen wahrnehmbaren Geruch aufweist. Beim Einsatz derartiger Aldehyde **ALD** sind Harz-Komponenten **K1** zugänglich, welche geruchsfrei und VOC-frei sind.

Als Aldehyd **ALD** bevorzugt ist 2,2-Dimethyl-3-lauroyloxypropanal.

Die Härter-Komponente **K2** der zweikomponentigen Epoxidharz-Zusammensetzung enthält mindestens ein Polyamin **A1** mit mindestens einer primären Aminogruppe.

Geeignet als Polyamin **A1** sind insbesondere die folgenden Polyamine:
- aliphatische, cycloaliphatische oder arylaliphatische primäre Diamine, beispielsweise Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclo-hexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Xylylendiamin;
- Ethergruppen-haltige aliphatische primäre Diamine, beispielsweise Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxado-decan-3,10-diamin, 4,7,10-Trioxatridecan-1,13-diamin und höhere Oligomere dieser Diamine, Bis-(3-aminopropyl)polytetrahydrofurane und andere Polytetrahydrofuran-diamine mit Molekulargewichten im Bereich von beispielsweise 350 bis 2000, sowie Polyoxyalkylen-Diamine. Letztere stellen typischerweise Produkte aus der Aminierung von Polyoxyalkylen-Diolen dar und sind beispielsweise erhältlich unter dem Namen Jeffamine^{®} (von Huntsman), unter dem Namen Polyetheramin (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramin D 230, Polyetheramin D 400 und Polyetheramin D 2000, PC Amine^{®} DA 250, PC Amine^{®} DA 400, PC Amine^{®} DA 650 und PC Amine^{®} DA 2000;
- aliphatische, cycloaliphatische oder arylaliphatische primäre Triamine wie 4-Aminomethyl-1,8-octandiamin, 1,3,5-Tris-(aminomethyl)-benzol, 1,3,5-Tris-(aminomethyl)-cyclohexan, Tris-(2-aminoethyl)-amin, Tris-(2-aminopropyl)-amin, Tris-(3-aminopropyl)-amin;
- primäre Polyoxyalkylen-Triamine, welche typischerweise Produkte aus der Aminierung von Polyoxyalkylen-Triolen darstellen und beispielsweise erhältlich sind unter dem Handelsnamen Jeffamine^{®} (von Huntsman), unter dem Namen Polyetheramin (von BASF) oder unter dem Namen PC Amine^{®} (von Nitroil), wie zum Beispiel Jeffamine^{®} T-403, Jeffamine^{®} T-3000, Polyetheramin T403 und PC Amine^{®} TA 403;
- tertiäre Aminogruppen aufweisende Polyamine, wie beispielsweise N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)-dodecylamin und N,N-Bis-(3-aminopropyl)-talgalkylamin, erhältlich als Triameen^{®} Y12D und Triameen^{®} YT (von Akzo Nobel);
- sekundäre Aminogruppen aufweisende Polyamine, wie beispielsweise Diethylentriamin (DETA), Dipropylentriamin (DPTA), Bis-hexamethylentriamin (BHMT), 3-(2-Aminoethyl)aminopropylamin, N3-(3-Aminopentyl)-1,3-pentandiamin, N5-(3-Aminopropyl)-2-methyl-1,5-pentandiamin, N5-(3-Amino-1 - ethylpropyl)-2-methyl-1,5-pentandiamin, N,N'-Dibutylethylendiamin; N,N'-Di-tert.butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N4-Cyclohexyl-2-methyl-N2-(2-methylpropyl)-2,4-pentandiamin, N,N'-Dialkyl-1,3-xylylendiamin, Bis-(4-(N-alkylamino)-cyclohexyl)-methan, 4,4'-Trimethylen-dipiperidin, N-alkylierte Polyetheramine, beispielsweise die Jeffamine^{®}-Typen SD-231, SD-401, SD-404 und SD-2001 (von Huntsman);
- Amin/Polyepoxid-Addukte, insbesondere Addukte aus den genannten Polyaminen mit Diepoxiden im Molverhältnis von mindestens 2/1, insbesondere im Molverhältnis von 2/1 bis 6/1;
- sowie Polyamidoamine, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder Triethylentetramin (TETA), darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607, Euretek^{®} 530 (von Huntsman), Beckopox^{®} EH 651, EH 654, EH 655, EH 661 und EH 663 (von Cytec);
- Polyamine **A2** mit mindestens einer primären und mindestens zwei sekundären Aminogruppen.

Als Polyamin **A2** sind insbesondere die Folgenden geeignet:
- zwei primäre und mindestens zwei sekundäre Aminogruppen aufweisende aliphatische Polyamine, beispielsweise sogenannte Polyalkylenamine wie Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", HEPA) und N,N'-Bis(3-amino-propyl)ethylendiamin. Solche Polyalkylenamine werden beispielsweise hergestellt aus 1,2-Dichlorethan und Ammoniak, oder aus der Cyanoethylierung oder Cyanobutylierung und anschliessender Hydrierung von primären Polyaminen;
- sogenannte Polyethylenimine (PEI); dabei handelt es sich um verzweigte polymere Amine aus der Polymerisation von Ethylenimin. Ein geeignetes Polyethylenimin weist typischerweise ein mittleres Molekulargewicht im Bereich von 250 bis 25'000 g/mol auf und enthält tertiäre, sekundäre und primäre Aminogruppen. Polyethylenimine sind beispielsweise erhältlich unter dem Handelsnamen Lupasol^{®} (von BASF), zum Beispiel die Typen Lupasol^{®} FG, Lupasol^{®} G20 und Lupasol^{®} PR 8515;
- Amin/Polyepoxid-Addukte, welche mindestens eine primäre und mindestens zwei sekundäre Aminogruppen aufweisen, insbesondere die Addukte aus Polyalkylenaminen mit Diepoxiden im Molverhältnis von mindestens 2/1, insbesondere im Molverhältnis von 2/1 bis 6/1, wobei als Polyalkylenamin insbesondere DETA, DPTA, BHMT, 3-(2-Aminoethyl)aminopropylamin, N3-(3-Aminopentyl)-1,3-pentandiamin, N5-(3-Aminopropyl)-2-methyl-1,5-pentandiamin, N5-(3-Amino-1-ethylpropyl)-2-methyl-1,5-pentandiamin, TETA, TEPA, PEHA, HEPA und N,N'-Bis(3-aminopropyl)ethylendiamin geeignet sind;
- Polyamidoamine, welche mindestens eine primäre und mindestens zwei sekundäre Aminogruppen aufweisen, wie beispielsweise das Reaktionsprodukt aus einer ein- oder mehrwertigen Carbonsäure, beziehungsweise deren Ester oder Anhydride, und einem Polyalkylenamin wie beispielsweise DETA oder TETA.

Bevorzugt als Polyamin **A1** sind die Polyamine **A2** sowie 1,5-Diamino-2-methylpentan (MPMD), 2-Butyl-2-ethyl-1,5-pentandiamin (C11-Neodiamin), 2,2,4- und 2,4,4-Trimethylhexamethylendiamin (TMD), Bis-(4-amino-3-methylcyclohexyl)-methan, 1-Amino-3-aminomethyl-3,5,5-trimethylcyclohexan (= Isophorondiamin oder IPDA), 1,3-Bis-(aminomethyl)cyclohexan, 3(4),8(9)-Bis-(aminomethyl)-tricyclo[5.2.1.0^{2,6}]decan, 1,3-Xylylendiamin und Ethergruppen-haltige Di- und Triamine aus der Aminierung von Polyoxyalkylen-Di- und Triolen mit einem Molekulargewicht unter 500 g/mol, insbesondere die kommerziellen Typen Jeffamine^{®} D-230, Jeffamine^{®} D-400 und Jeffamine^{®} T-403 (von Huntsman).

Besonders bevorzugt ist das Polyamin **A1** ein Polyamin **A2** mit mindestens einer primären und mindestens zwei sekundären Aminogruppen.

Bevorzugt ist das Polyamin **A2** ausgewählt aus der Gruppe bestehend aus TETA, TEPA, PEHA, HEPA, N,N'-Bis(3-aminopropyl)ethylendiamin; Addukten von DETA, DPTA, BHMT, TETA, TEPA, PEHA, HEPA oder N,N'-Bis(3-aminopropyl)ethylendiamin mit einem Diglycidylether, insbesondere einem Diglycidylether von Bisphenol-A, Bisphenol-F, Bisphenol-A/F, Ethylenglykol, Propylenglykol, Butylenglykol, Hexandiol, Octandiol oder einem Polypropylenglykol; und Polyamidoaminen.

Als Polyamin **A1** sind auch Mischungen verschiedener Polyamine geeignet, insbesondere Mischungen aus mindestens einem Polyamin A2 und mindestens einem weiteren Polyamin mit mindestens einer primären Aminogruppe.

Bevorzugt liegt das Verhältnis der Anzahl Aldehydgruppen in der Harz-Komponente **K1** in Bezug auf die Anzahl primäre Aminogruppen in der Härter-Komponente **K2** im Bereich von 0.1 bis 1.1.

Für den Fall, dass das Polyamin **A1** nur eine oder gar keine sekundäre Aminogruppe aufweist, liegt das Verhältnis der Anzahl Aldehydgruppen in der Harz-Komponente **K1** in Bezug auf die Anzahl primäre Aminogruppen in der Härter-Komponente **K2** bevorzugt im Bereich von 0.1 bis 0.5.

Für den Fall, dass das Polyamin **A1** mindestens zwei sekundäre Aminogruppen aufweist― also in Form eines Polyamins **A2** vorliegt ― , liegt das Verhältnis der Anzahl Aldehydgruppen in der Harz-Komponente **K1** in Bezug auf die Anzahl primäre Aminogruppen dieses Polyamins **A2** in der Härter-Komponente **K2** bevorzugt im Bereich von 0.5 bis 1.0, insbesondere im Bereich von 0.8 bis 1.0.

Die Härter-Komponente **K2** der zweikomponentigen Epoxidharz-Zusammensetzung kann neben dem Polyamin **A1** weitere gegenüber Epoxidgruppen reaktive Verbindungen enthalten, insbesondere Mercaptogruppen aufweisende Verbindungen, wie insbesondere
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 und LP-2; sowie weiterhin bekannt unter dem Markennamen Thioplast^{®} (von Akzo Nobel), insbesondere die Typen G 10, G 112, G 131, G 1, G 12, G 21, G 22, G 44 und G 4;
- Mercaptan-terminierte Polyoxyalkylen-Ether, erhältlich beispielsweise durch Umsetzung von Polyoxyalkylendi- und triolen entweder mit Epichlorhydrin oder mit einem Alkylenoxid, gefolgt von Natriumhydrogensulfid;
- Mercaptan-terminierte Epoxy-Härter in Form von Polyoxyalkylen-Derivaten, bekannt unter dem Markennamen Capcure^{®} (von Cognis), insbesondere die Typen WR-8, LOF und 3-800;
- Polyester von Thiocarbonsäuren, beispielsweise Pentaerythritoltetramercaptoacetat, Trimethylolpropantrimercaptoacetat, Glykoldimercaptoacetat, Pentaerythritoltetra-(3-mercaptopropionat), Trimethylolpropantri-(3-mercaptopropionat) und Glykoldi-(3-mercaptopropionat), sowie die Veresterungsprodukte von Polyoxyalkylendiolen und -triolen, ethoxyliertem Trimethylolpropan und Polyester-Diolen mit Thiocarbonsäuren wie Thioglykolsäure und 2- oder 3-Mercaptopropionsäure;
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) und Ethandithiol.

Sowohl die Harz-Komponente **K1** als auch die Härter-Komponente **K2** können weitere Hilfs- und Zusatzstoffe enthalten, wie beispielsweise:
- Lösemittel, Filmbildehilfsmittel oder Extender, wie Toluol, Xylol, Methylethylketon, 2-Ethoxyethanol, 2-Ethoxy-ethylacetat, Benzylalkohol, Ethylenglykol, Diethylenglykolbutylether, Dipropylenglykolbutylether, Ethylenglykolbutylether, Ethylenglykolphenylether, N-Methylpyrrolidon, Propylenglykolbutylether, Propylenglykolphenylether, Diphenylmethan, Diisopropylnaphthalin, Erdölfraktionen wie zum Beispiel Solvesso-Typen (von Exxon), aromatische Kohlenwasserstoffharze, insbesondere Phenolgruppen-haltige Typen, Sebacate, Phthalate, organische Phosphor- und Sulfonsäureester und Sulfonamide;
- Reaktivverdünner, beispielsweise Epoxid-Reaktivverdünner, wie sie vorgängig bereits erwähnt wurden, epoxidiertes Sojaöl oder Leinöl, Acetoacetatgruppen aufweisende Verbindungen, insbesondere acetoacetylierte Polyole, Butyrolakton, sowie weiterhin Isocyanate und Reaktivgruppen-aufweisende Silikone;
- Polymere, wie beispielsweise Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluor-haltige Polymere, Sulfonamid-modifizierte Melamine und gereinigte Montan-Wachse;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Dolomite, Wollastonite, Kaoline, Mica (Kalium-AluminiumSilikat), Molekularsiebe, Aluminiumoxide, Aluminiumhydroxide, Kieselsäuren, Zemente, Gipse, Flugaschen, Russ, Graphit, Metall-Pulver wie Aluminium, Kupfer, Eisen, Silber oder Stahl, PVC-Pulver oder Hohlkugeln;
- Fasern, beispielsweise aus Kunststoff oder Glas;
- Pigmente, beispielsweise Titandioxid und Eisenoxide;
- Beschleuniger, welche die Reaktion zwischen Aminogruppen und Epoxidgruppen beschleunigen, beispielsweise Säuren oder zu Säuren hydrolysierbare Verbindungen, beispielsweise organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie beispielsweise Phosphorsäure, oder Mischungen der vorgenannten Säuren und Säureester; weiterhin tertiäre Amine wie 1,4-Diazabicyclo[2.2.2]octan, Benzyldimethylamin, α-Methylbenzyldimethylamin, Triethanolamin, Dimethyl-aminopropylamin, Salze solcher tertiärer Amine, quaternäre Ammoniumsalze, wie beispielsweise Benzyltrimethylammoniumchlorid, Phenole, insbesondere Bisphenole, PhenolHarze und Mannich-Basen wie beispielsweise 2-(Dimethylaminomethyl)-phenol und 2,4,6-Tris-(dimethylaminomethyl)-phenol, Phosphite wie beispielsweise Di- und Triphenylphosphite, sowie Mercaptogruppen aufweisende Verbindungen, wie sie bereits vorgängig genannt wurden;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie 3-Glycidoxypropyltrimethoxysilan, 3-Aminopropyltrimethoxysilan, N-(2-Aminoethyl)-3-amino-propyl-trimethoxysilan, N-(2-Aminoethyl)-N'-[3-(trimethoxysilyl)propyl]ethylendiamin, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen;
- Stabilisatoren gegen Oxidation, Wärme, Licht und UV-Strahlung;
- flammhemmende Substanzen, insbesondere Verbindungen wie Aluminiumhydroxid (AI(OH)₃; auch ATH für "Aluminiumtrihydrat" genannt), Magnesiumhydroxid (Mg(OH)₂; auch MDH für "Magnesiumdihydrat" genannt), Ammoniumsulfat ((NH₄)₂SO₄) Borsäure (B(OH)₃), Zinkborat, Melaminborat und Melamincyanurat; Phosphor-haltige Verbindungen wie Ammoniumphosphat ((NH₄)₃PO₄), Ammoniumpolyphosphat, Melaminphosphat, Melaminpyrophosphat, Triphenylphosphat, Diphenylkresylphosphat, Trikresylphosphat, Triethylphosphat, Tris-(2-ethylhexyl)phosphat, Trioctylphosphat, Mono-, Bis- und Tris-(isopropylphenyl)phosphat, Resorcinol-bis(diphenylphosphat), Resorcinol-diphosphat-Oligomer, Tetraphenyl-resorcinol-diphosphit, Ethylendiamin-diphosphat und Bisphenol-A-bis(diphenylphosphat); Halogen-haltige Verbindungen wie Chloroalkylphosphate, insbesondere Tris-(chloroethyl)phosphat, Tris-(chloropropyl)phosphat und Tris-(dichloro-isopropyl)phosphat, polybromierte Diphenylether, insbesondere Decabromdiphenylether, polybromiertes Diphenyloxid, Tris-[3-Bromo-2,2-bis(bromomethyl)propyl]phosphat, Tetrabromo-Bisphenol-A, Bis-(2,3-dibromopropylether) von Bisphenol A, bromierte Epoxidharze, Ethylen-bis(tetrabromophtalimid), Ethylen-bis(dibromo-norbornandicarboximid), 1,2-Bis-(tribromophenoxy)ethan, Tris-(2,3-dibromopropyl)isocyanurat, Tribromophenol, Hexabromocyclododecan, Bis-(hexachlorocyclopentadieno)cyclooctan und Chlorparaffine, sowie Kombinationen aus einer Halogen-haltigen Verbindung und Antimontrioxid (Sb₂O₃) oder Antimonpentoxid (Sb₂O₅);
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen.

Bevorzugt enthält die zweikomponentige Epoxidharz-Zusammensetzung weitere Hilfs- und Zusatzstoffe, insbesondere Netzmittel, Verlaufsmittel, Entschäumer, Stabilisatoren, Pigmente und Beschleuniger, insbesondere Salicylsäure oder 2,4,6-Tris-(dimethylaminomethyl)-phenol.

Bevorzugt weist die zweikomponentige Epoxidharz-Zusammensetzung weniger als 10 Gewichts-%, bevorzugt weniger als 5 Gewichts-%, an Benzylalkohol auf. Insbesondere ist die zweikomponentige Epoxidharz-Zusammensetzung frei von Benzylalkohol.

Die Harz-Komponente **K1** und die Härter-Komponente **K2** können jeweils in einer geeigneten Verpackung oder Anordnung, wie beispielsweise einem Fass, einem Hobbock, einem Beutel, einem Eimer, einer Büchse, einer Kartusche oder einer Tube, vor ihrer Anwendung während mehreren Monaten bis zu einem Jahr und länger aufbewahrt werden, ohne dass sie sich in ihren jeweiligen Eigenschaften in einem für ihren Gebrauch relevanten Ausmass verändern.

Zur Anwendung der zweikomponentigen Epoxidharz-Zusammensetzung werden die Harz-Komponente **K1** und die Härter-Komponente **K2** miteinander vermischt. Das Mischungsverhältnis zwischen der Harz-Komponente **K1** und der Härter-Komponente **K2** wird bevorzugt so gewählt, dass die gegenüber Epoxidgruppen reaktiven Gruppen in der Härter-Komponente **K2** in einem geeigneten Verhältnis zu den Epoxidgruppen in der Harz-Komponente **K1** stehen.

Geeigneterweise liegt das Verhältnis der Anzahl von gegenüber Epoxidgruppen reaktiven Gruppen in der Härter-Komponente **K2** gegenüber der Anzahl Epoxidgruppen in der Harz-Komponente **K1** im Bereich von 0.5 bis 1.5, insbesondere 0.8 bis 1.2, wobei soviele primäre Aminogruppen nicht zu den gegenüber Epoxidgruppen reaktiven Gruppen gezählt werden, wie in der Harz-Komponente **K1** Aldehydgruppen vorhanden sind.

Dem Fachmann ist bekannt, dass primäre Aminogruppen gegenüber Epoxidgruppen difunktionell sind, und eine primäre Aminogruppe somit als zwei gegenüber Epoxidgruppen reaktive Gruppen zählt.

In Gewichtsteilen liegt das Mischungsverhältnis zwischen der Harz-Komponente **K1** und der Härter-Komponente **K2** üblicherweise im Bereich von 1:10 bis 10:1.

Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zuviel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50 °C, bevorzugt bei etwa 10 bis 30 °C, liegt.

Mit der Vermischung der beiden Komponenten beginnt die Aushärtung der beschriebenen Epoxidharz-Zusammensetzung durch chemische Reaktion.

Dabei reagieren in der vermischten Zusammensetzung zum einen die Aldehydgruppen des Aldehyds aus der Harz-Komponente **K1** schnell mit primären Aminogruppen des Polyamins **A1** aus der Härter-Komponente **K2** unter Ausbildung von Aldiminogruppen und Wasser (Kondensationsreaktion). Auf diese Weise umgesetzte primäre Aminogruppen des Polyamins **A1** stehen anschliessend für eine Reaktion mit Epoxidgruppen bei den gegebenen Reaktionsbedingungen deshalb weitgehend nicht mehr zur Verfügung. Zur Illustration sei hier beispielhaft die Reaktion von Benzaldehyd mit PEHA im Molverhältnis 2:1 im nachfolgenden Formelschema (V) dargestellt.

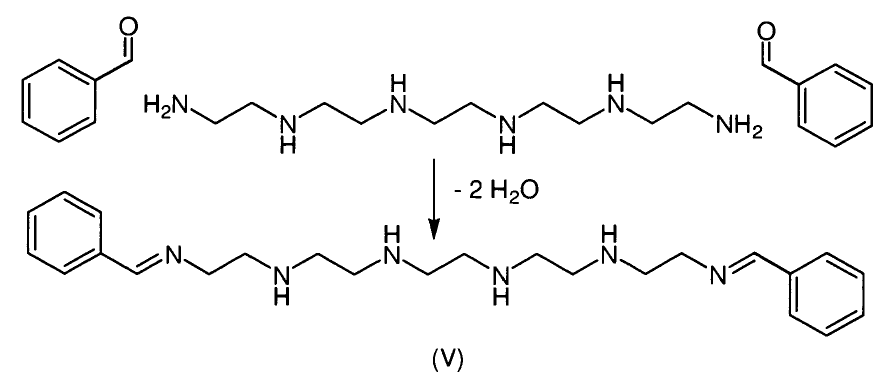

Hierbei wird nach der Umsetzung formal ein Härter mit vier sekundären Aminogruppen gebildet, welcher frei ist von primären Aminogruppen. Das bei der Kondensationsreaktion entstehende Wasser verbleibt in der vermischten Zusammensetzung und kann dort bei der Aushärtung unter Umständen einen beschleunigenden Einfluss ausüben. Abhängig von der Umgebungsfeuchte und der Temperatur verdunstet das Wasser mehr oder weniger rasch aus der Zusammensetzung.

Zum anderen beginnen die in der vermischten Zusammensetzung vorhandenen NH-Wasserstoffe und gegebenenfalls vorhandene weitere gegenüber Epoxidgruppen reaktive Gruppen mit Epoxidgruppen unter deren Ringöffnung zu reagieren (Additionsreaktion). Als Ergebnis dieser Reaktionen polymerisiert die Zusammensetzung und härtet damit aus. Es wird beobachtet, dass die beschriebene zweikomponentige Epoxidharz-Zusammensetzung trotz dem verringerten Gehalt an primären Aminogruppen erstaunlich rasch aushärtet, auch bei relativ tiefen Temperaturen im Bereich von 5 bis 10 °C.

Die Aushärtung erfolgt insbesondere bei Umgebungstemperatur, welche typischerweise im Bereich von etwa 5 bis 50 °C, bevorzugt bei etwa 10 bis 30 °C, liegt.

Die Aushärtung erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.

Somit beschreibt die vorliegende Erfindung auch eine ausgehärtete Zusammensetzung, welche durch das Vermischen der Harz-Komponente K1 und der Härter-Komponente K2 einer zweikomponentigen Epoxidharz-Zusammensetzung, wie sie vorgängig beschrieben wurde, erhalten wird.

Ein deutlicher Hinweis darauf, dass der Aldehyd bei der Aushärtung der zweikomponentigen Epoxidharz-Zusammensetzung über Aldiminogruppen kovalent ans ausgehärtete Polymer gebunden wird, ergibt sich aus der Beobachtung, dass in erfindungsgemässen zweikomponentigen Epoxidharz-Zusammensetzungen kurz nach dem Vermischen der beiden Komponenten im IR-Spektrum die für die jeweilige Aldehydgruppe typische Bande im Bereich von 1750 bis 1650 cm⁻¹ nicht mehr nachweisbar ist, während im Bereich von 1680 bis 1620 cm⁻¹ die für die jeweilige entsprechende Aldiminogruppe typische Bande deutlich detektierbar und eindeutig ist.

Wird die beschriebene Epoxidharz-Zusammensetzung flächig, das heisst als dünner Film mit einer Schichtdicke von typischerweise etwa 50 µm bis etwa 5 mm, auf einem Substrat appliziert, entsteht bei der Aushärtung ein weitgehend klarer, glänzender und klebefreier Film, welcher bezüglich Härte und Zähigkeit sowie Haftung zum Untergrund von hervorragender Qualität ist. Im Gegensatz dazu härten entsprechende Zusammensetzungen des Standes der Technik, welche keinen Aldehyd in der Harz-Komponente K1 enthalten, zu Filmen mit Blushing-bedingten Oberflächendefekten wie Rauheit, Fleckigkeit, Trübheit und Klebrigkeit.

Die Applikation der beschriebenen Epoxidharz-Zusammensetzung erfolgt auf mindestens ein Substrat, wobei als Substrat die Folgenden besonders geeignet sind:
- Glas, Glaskeramik, Beton, Mörtel, Backstein, Ziegel, Gips und Natursteine wie Granit oder Marmor;
- Metalle oder Legierungen wie Aluminium, Stahl, Eisen, Buntmetalle, verzinkte Metalle;
- Leder, Textilien, Papier, Holz, mit Harz gebundene Holzwerkstoffe, Harz-Textil-Verbundwerkstoffe und weitere sogenannte Polymer-Composites;
- Kunststoffe wie Polyvinylchlorid (Hart- und Weich-PVC), Acrylonitril-Butadien-Styrol-Copolymere (ABS), SMC (Sheet Moulding Compounds), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- beschichtete Substrate wie pulverbeschichtete Metalle oder Legierungen; sowie Farben und Lacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

Die zweikomponentige Epoxidharz-Zusammensetzung ist speziell geeignet für flächige Applikationen.

Die beschriebene Epoxidharz-Zusammensetzung kann insbesondere verwendet werden als Beschichtung, Bodenbelag, Anstrich, Lack, Primer oder Grundierung, sowie als Klebstoff, Dichtstoff oder Vergussmasse. Bei diesen Verwendungen kommen ihre ausgezeichneten Eigenschaften wie Wasserdichtigkeit, Korrosionsschutz, Haftung, Chemikalienbeständigkeit und/oder Härte und Zähigkeit zum Tragen. Ihre Verwendung kann beispielsweise im Hoch- oder Tiefbau erfolgen, beispielsweise als Bodenbelag oder Beschichtung entweder für Innenräume wie Büros, Industriehallen, Turnhallen oder Kühlräume, oder im Aussenbereich für Balkone, Terrassen, Parkdecks, Brücken oder Dächer, sowie als Schutzbeschichtung für Beton oder Metalle, insbesondere als Schutzanstrich gegen Korrosion. Weiterhin kann sie verwendet werden für die Fertigung oder Reparatur von industriellen Gütern oder Konsumgütern.

Die beschriebene zweikomponentige Epoxidharz-Zusammensetzung weist verschiedene Vorteile auf.

Einerseits ist die Harz-Komponente **K1** relativ niedrigviskos, da das Epoxidharz durch den Aldehyd überraschend gut verdünnt wird, insbesondere wenn dieser bei Raumtemperatur flüssig ist. Für eine Beschichtung ist eine tiefe Grundviskosität eine wichtige Voraussetzung, um ein gutes Fliessverhalten und somit eine gute Applizierbarkeit zu gewährleisten. Diepoxid-Flüssigharze weisen typischerweise eine eher hohe Viskosität auf und müssen für eine Anwendung in Beschichtungen üblicherweise verdünnt werden. Die zur Verdünnung im Stand der Technik üblicherweise eingesetzten Epoxid-Reaktivverdünner sind kostspielig, wirken oft stark reizend und können Allergien auslösen. Die Verdünnungswirkung des Aldehyds ermöglicht es, weitgehend oder ganz auf den Einsatz von Epoxid-Reaktivverdünnern oder insbesondere Lösemittel zu verzichten. Weiterhin ist es wesentlich einfacher, die Harz-Komponente **K1** falls gewünscht zu pigmentieren, wenn diese niedrigviskos ist.

Die Anwesenheit des Aldehyds in der Harz-Komponente **K1** sowie ein allfälliges Pigmentieren der Harz-Komponente **K1** bewirken überdies eine Erhöhung des Volumens derselben, was für das Einstellen eines für die Praxis geeigneten Mischungsverhältnisses ein grosser Vorteil sein kann. Für eine Applikation als Beschichtung wird die Härter-Komponente oft ins Gebinde der Harz-Komponente umgegossen und die beiden Komponenten darin vermischt und daraus appliziert. Bei einer solchen Anwendung ist es vorteilhaft, wenn das Mischungsverhältnis so eingestellt ist, dass die Harz-Komponente ein eher grosses Volumen und die Härter-Komponente ein eher kleines Volumen aufweist, da sonst die Harz-Komponente in ein Gebinde mit relativ viel Leerraum verpackt werden muss, was hohe Gebindekosten und einen hohen Platzverbrauch bei der Lagerung und beim Transport zur Folge hat.

Der Einsatz der beschriebenen geruchsfreien Aldehyde ALD weist zusätzliche Vorteile auf. Es handelt es sich dabei um geruchsfreie Substanzen mit einem relativ hohen Molekulargewicht und einer überraschend guten Verdünnungswirkung, welche nicht als VOC gelten. Dadurch sind Harz-Komponenten **K1** zugänglich, welche geruchsfrei und VOC-frei sind, und bei welchen unter Umständen auf einen Epoxid-Reaktivverdünner ganz verzichtet werden kann.

Andererseits treten mit der beschriebenen Zusammensetzung, insbesondere bei flächiger Anwendung, kaum Blushing-Effekte auf. Dies ist vermutlich darauf zurückzuführen, dass der Aldehyd den Gehalt an primären Aminogruppen beim Vermischen der Komponenten durch die beschriebene chemische Reaktion soweit vermindert, dass diese mit CO₂ nicht mehr merklich reagieren. Überraschenderweise scheint diese Reaktion trotz ausbleibender Entfernung des Kondensationswassers und damit fehlendem Druck auf das Reaktionsgleichgewicht rasch und in einem solchen Ausmass stattzufinden, dass die zum Aldehyd stöchiometrisch vorhandenen primären Aminogruppen nicht ausreichend Zeit haben, mit CO₂ zu reagieren. Dies gilt auch unter ungünstigen, das heisst das Blushing begünstigenden, Reaktionsbedingungen, nämlich bei tiefer Aushärtungstemperatur und hoher Luftfeuchtigkeit. Es ist deshalb möglich, weitgehend oder ganz auf den Zusatz von das Blushing vermindernden Zusätzen des Standes der Technik, welche bei der Aushärtung nicht kovalent in der Zusammensetzung gebunden werden und als VOC ausgasen, wie insbesondere Benzylalkohol, zu verzichten.

Im Gegensatz dazu wird der Aldehyd bei der Reaktion mit den primären Aminogruppen kovalent gebunden und verbleibt damit dauerhaft in der ausgehärteten Zusammensetzung, auch in Anwesenheit von Wasser. Es kommt somit kaum zu einer Ausgasung des Aldehyds aus der aushärtenden, beziehungsweise ausgehärteten, Zusammensetzung, was sich sehr günstig auf die Emissionswerte sowie auf die Abriebfestigkeit der ausgehärteten Zusammensetzung auswirkt. Die beschriebene Zusammensetzung lässt sich somit besonders vorteilhaft auch in Innenräumen anwenden.

Das bei der Reaktion zwischen Aldehyd und primären Aminogruppen gebildete Wasser kann die Aushärtung beschleunigen.

Bei der Aushärtung der beschriebenen Zusammensetzung entstehen weitgehend klare, glänzende oder leicht opake und klebefreie Filme, welche ausgezeichnete mechanische Eigenschaften, wie hohe Härte, gute Kratzfestigkeit und Zähigkeit sowie eine gute Haftung zu verschiedensten Substraten aufweisen.

Mit der beschriebenen Zusammensetzung sind somit hochwertige zweikomponentige Epoxidharz-Systeme erhältlich, welche nach ihrer Aushärtung nur einen geringen Gehalt an flüchtigen organischen Verbindungen (VOC) aufweisen oder VOC-frei sind.

Es ist ein wesentlicher Aspekt der Erfindung, dass der Aldehyd ein Bestandteil der Harz-Komponente **K1** und nicht der Härter-Komponente K2 ist. Würde nämlich der Aldehyd als Bestandteil der Härter-Komponente K2 eingesetzt, so entfiele zum einen dessen Verdünnungswirkung in der Harz-Komponente; zum anderen entstehen bei der flächigen Anwendung einer solchen, nicht erfindungsgemässen Epoxidharz-Zusammensetzung qualitativ deutlich schlechtere Filme.

Ein weiterer Gegenstand der vorliegenden Erfindung ist die Verwendung eines Aldehyds zur Verdünnung eines Epoxidharzes oder einer Epoxidharz-Zusammensetzung, wobei als Aldehyd die vorgängig beschriebenen Aldehyde geeignet sind, insbesondere Benzaldehyd oder ein Aldehyd der Formel (11).

Ein weiterer Gegenstand der vorliegenden Erfindung ist ein Verfahren zur Verringerung von Blushing-Effekten bei der Aushärtung einer zweikomponentigen Epoxidharz-Zusammensetzung, deren Härter-Komponente mindestens ein Polyamin mit mindestens einer primären Aminogruppe enthält, indem der Harz-Komponente ein Aldehyd zugegeben wird. Als Polyamin mit mindestens einer primären Aminogruppe sind die vorgängig beschriebenen Polyamine **A1** geeignet, insbesondere die vorgängig beschriebenen Polyamine **A2** mit mindestens einer primären und mindestens zwei sekundären Aminogruppen. Als Aldehyd geeignet sind die vorgängig beschriebenen Aldehyde, insbesondere Benzaldehyd oder ein Aldehyd der Formel (II).

### Beispiele

### 1. Beschreibung der Messmethoden

Die **Viskosität** wurde auf einem Kegel-Platten-Viskosimeter Rheotec RC30 (Kegeldurchmesser 50 mm, Kegelwinkel 1°, Kegelspitze-PlattenAbstand 0.05 mm, Scherrate 10-100 s⁻¹) gemessen.

### 2. verwendete Rohmaterialien

| | |
|---|---|
| Araldite^{®} GY 250 (Huntsman) | Bisphenol-A-Diglycidylether, EEW ca. 187.5 g/Eq |
| Araldite^{®} DY-E (Huntsman) | Monoglycidylether eines C₁₂- bis C₁₄-Alkohols, EEW ca. 290 g/Eq |
| Araldite^{®} HY-960 (Huntsman) | 2,4,6-Tris-(dimethylaminomethyl)-phenol |
| Jeffamine^{®} D-230 (Huntsman) | Polypropylenglykol-Diamin, mittleres Molekulargewicht ca. 240 g/mol |
| Pentaethylenhexamin (Delamine) ("*PEHA*") | technisch, Molekulargewicht ca. 232 g/mol, Aminzahl ca. 1220 mg KOH/g |
| Tetraethylenpentamin (Delamine) ("*TEPA"*) | technisch, Molekulargewicht ca. 189 g/mol, Aminzahl ca. 1350 mg KOH/g |
| N4-Amin (BASF) ("*N4-Amin*") | N,N'-Bis(3-aminopropyl)ethylendiamin, Molekulargewicht 174 g/mol |
| Diethylentriamin (Delamine) ("*DETA*") | technisch, Molekulargewicht ca. 103 g/mol |
| Isophorondiamin (Evonik) ("*IPDA*") | 1-Amino-3-aminomethyl-3,5,5-trimethylcyclohexan, Molekulargewicht 170 g/mol |
| meta-Xylylendiamin (Mitsubishi Gas Chem.) (*"MXDA"*) | 1,3-Bis(aminomethyl)-benzol, Molekulargewicht 136 g/mol |
| *"AP-Ald"* | 3-Acetoxy-2,2-dimethylpropanal |
| *"EH-Ald"* | 2-Ethyl-hexanal |
| *"LP-Ald"* | 2,2-Dimethyl-3-lauroyloxypropanal |
| *"MP-Ald"* | 2,2-Dimethyl-3-(N-morpholino)-propanal |
| *"PP-Ald"* | 2,2-Dimethyl-3-phenylpropanal |

### 3. Herstellung von zweikomponentigen Epoxidharz-Zusammensetzungen

### Vergleichsbeispiele 1 bis 4 und Beispiele 5 bis 7

Für jedes der Beispiele wurde separat eine *Harz-Komponente* und eine ***Härter-Komponente*** mit den in der Tabelle 1 angegebenen Inhaltsstoffen in den angegebenen Mengen (in Gewichtsteilen) hergestellt (durch Vermischen, sofern die Komponente aus mehr als einem Inhaltsstoff bestand) und anschliessend die ***Harz-Komponente*** mit der ***Härter-Komponente*** mittels eines Zentrifugalmischers (SpeedMixer™ DAC 150, FlackTek Inc.) vermischt. Mit den vermischten Zusammensetzungen wurde jeweils ein Film in einer Schichtdicke von 500 µm auf eine Glasplatte aufgezogen und dieser bei 23 °C und 50 % relativer Feuchtigkeit (= Normklima, im Folgenden abgekürzt mit "NK") gelagert, beziehungsweise ausgehärtet. Nach 4 Wochen wurde der Aspekt der Filme beurteilt. Als "fehlerfrei" wurde ein Film bezeichnet, welcher klar war und eine harte, glänzende und klebefreie Oberfläche ohne Struktur aufwies. Als "Struktur" wird dabei jegliche Form von Zeichnung oder Muster auf der Oberfläche bezeichnet. Weiterhin wurde die Königshärte (Pendelhärte nach König, gemessen nach DIN EN ISO 1522) der Filme nach 14 Tagen ("Königshärte (14d)") bzw. nach 4 Wochen ("Königshärte (4w)") bzw. nach 5 Monaten ("Königshärte (5mt)") bestimmt. Der Geruch der vermischten Zusammensetzung wurde zweimal beurteilt durch Riechen mit der Nase in einem Abstand von 1 cm, das erste Mal 15 Minuten nach dem Vermischen der beiden Komponenten ("Geruch (15')") und das zweite Mal nach einer Aushärtungszeit von 4 Wochen ("Geruch (4w)").

Die Resultate sind in der Tabelle 1 angegeben.

**Tabelle 1: Zusammensetzung und Eigenschaften der Vergleichsbeispiele 1 bis 4 und der Beispiele 5 bis 7.**

| **Beispiel** | | **1 (Vgl.)** | **2 (Vgl.)** | **3 (Vgl.)** | **4 (Vgl.)** | **5** | **6** | **7** |
|---|---|---|---|---|---|---|---|---|
| ***Harz-Komponente:*** | | | | | | | | |
| | Araldite^{®} GY-250 | 167.2 | 167.2 | 167.2 | 167.2 | 167.2 | 167.2 | 167.2 |
| | Araldite^{®} DY-E | 31.8 | 31.8 | 31.8 | 31.8 | 31.8 | 31.8 | 31.8 |
| | Benzylalkohol | - | - | - | 27.0 | - | - | - |
| | Benzaldehyd | - | - | - | - | 53.0 | 70.8 | 106.0 |

| ***Härter-Komponente:*** | | | | | | | | |
|---|---|---|---|---|---|---|---|---|
| | *PEHA* | 29.0 | - | - | 29.0 | 58.0 | - | - |
| | *TEPA* | - | 27.0 | - | - | - | 63.0 | - |
| | *N4-Amin* | - | - | 29.0 | - | - | - | 87.0 |
| | | | | | | | | |
| Geruch (15') | | *Amin* | *Amin* | *Amin* | *Amin* | *Amin* | *Amin* | *Amin* |
| Geruch (4w) | | keiner | keiner | keiner | keiner | keiner | keiner | keiner |
| Königshärte (4w) | | n.m.¹ | n.m.¹ | n.m.¹ | 151 s | 163 s | 130 s | 70 s |
| Aspekt | | *msk* | *msk* | *msk* | *kgB* | *ff* | *ff* | *ff* |

| | | | | | | | | |
|---|---|---|---|---|---|---|---|---|
| "Vgl." steht für "Vergleich" "n.m." steht für "nicht messbar" "*Amin*" steht für "riecht leicht nach Amin" *"msk"* steht für "matt, starke Struktur, klebriger Belag" *"kgB"* steht für "klar und glänzend, aber viele feine Blasen im Film" *"ff"* steht für "fehlerfrei" ¹ Belag verfälscht die Messungen. | | | | | | | | |

Aus den Vergleichsbeispielen 1 bis 3 ist ersichtlich, dass flächig applizierte zweikomponentige Epoxidharz-Zusammensetzungen, welche als Härter *PEHA, TEPA* oder *N4-Amin* enthalten, bei der Aushärtung im NK zu starkem Blushing neigen, was zu ausgehärteten Filmen von schlechter Qualität führt. Aus dem Vergleichsbeispiel 4 ist ersichtlich, dass die Zugabe von Benzylalkohol das Blushing zwar unterdrückt, bei der Aushärtung aber Blasen entstehen.

Aus den erfindungsgemässen Beispielen 5 bis 7 ist ersichtlich, dass der Benzaldehyd der *Harz-Komponente* das Blushing bei der Aushärtung verhindert, und dass die vermischten Zusammensetzungen bereits kurz nach dem Vermischen der beiden Komponenten jeweils nicht mehr nach Benzaldehyd riechen, obwohl Benzaldehyd eine stark und typisch nach Mandeln riechende Substanz ist, welche selbst in kleinsten Konzentrationen noch wahrnehmbar ist.

### Beispiel 8 und Vergleichsbeispiele 9, 10 und 11

Für jedes der Beispiele wurde separat eine ***Harz-Komponente*** und eine ***Härter-Komponente*** mit den in der Tabelle 2 angegebenen Inhaltsstoffen in den angegebenen Mengen (in Gewichtsteilen) hergestellt und anschliessend wie für Beispiel 5 beschrieben vermischt. Mit den vermischten Zusammensetzungen wurden jeweils je drei Filme in einer Schichtdicke von 500 µm auf je eine Glasplatte aufgezogen und diese Glasplatten bei unterschiedlichen Bedingungen gelagert, beziehungsweise ausgehärtet. Alle drei Filme wurden direkt nach der Applikation gewogen, dann während 4 Tagen im NK ("(4d)") belassen und anschliessend durch erneutes Wägen der Gewichtsverlust (in Gewichts-% bezogen auf das Anfangsgewicht direkt nach der Applikation) bestimmt. Je eine der drei Platten wurde im NK belassen ― in der Tabelle mit "Lagerung im NK" bezeichnet ― und nach 28 Tagen noch einmal der Gewichtsverlust ("(28d)"), bezogen auf dasselbe Anfangsgewicht, durch erneutes Wägen bestimmt. Die anderen beiden Glasplatten wurden in einem Umluftofen bei 80 °C gelagert. Nach jeweils 3, 7 und 14 Tagen wurde von diesen Platten nach einer Abkühlung von 2 Stunden im NK der Gewichtsverlust ("(3d)", bzw. "(7d)" bzw. "(14d)"), bezogen auf dasselbe Anfangsgewicht, durch erneutes Wägen bestimmt. Auf dieselbe Weise wie für Beispiel 5 beschrieben wurden der Aspekt und die Königshärte der Platten bestimmt.

Die Resultate sind in der Tabelle 2 angegeben.

**Tabelle 2: Zusammensetzung und Eigenschaften des Beispiels 8 und der Vergleichsbeispiele 9 bis 11. "n.m." steht für "nicht messbar"**

| **Beispiel** | | **8** | **9 (Vergleich)** | **10 (Vergleich)** | **11 (Vergleich)** |
|---|---|---|---|---|---|
| ***Harz-Komponente:*** | | | | | |
| | Araldite^{®} GY-250 | 167.2 | 167.2 | 167.2 | 167.2 |
| | Araldite^{®} DY-E | 31.8 | 31.8 | 31.8 | 31.8 |
| | Benzaldehyd | 53.0 | - | - | - |
| | Benzylalkohol | - | 27.0 | 43.3 | - |

| ***Härter-Komponente:*** | | | | | |
|---|---|---|---|---|---|
| | *PEHA* | 58.0 | 29.0 | - | - |
| | *DETA* | - | - | 20.6 | - |
| | *IPDA* | - | - | - | 42.5 |
| | Benzylalkohol | - | - | - | 47.2 |
| | Salicylsäure | - | - | - | 4.7 |
| | | | | | |
| Benzylalkohol-Gehalt | | - | 10.5 %Gew. | 16.5 %Gew. | 16.1 %Gew. |
| theoretischer Wasser-Gehalt ¹ | | 2.9 %Gew. | - | - | - |
| | | | | | |

| ***Lagerung im NK:*** | | | | | |
|---|---|---|---|---|---|
| | Gewichtsverlust | 1.5 % (4d) | 1.3 % (4d) | 2.7 % (4d) | 1.9 % (4d) |
| | | 1.5 % (28d) | 1.3 % (28d) | 3.7 % (28d) | 2.3 % (28d) |
| | Aspekt | fehlerfrei | klar, feine Blasen | klar, feine Blasen | fehlerfrei |
| | Königshärte (4w) | 165 s | 151 s | 122 s | 160 s |

| ***Lagerung bei 80 °C:*** | | | | | |
|---|---|---|---|---|---|
| | Gewichtsverlust | 4.5 % (3d) | 7.6 % (3d) | 15.1 % (3d) | 8.8 % (3d) |
| | | 5.1 % (7d) | 8.5 % (7d) | 16.0 % (7d) | 10.5 % (7d) |
| | | 5.1 % (14d) | 8.9 % (14d) | 16.8% (14d) | 12.0% (14d) |
| | Aspekt | gelb, etwas matt | gelblich, grössere Blasen | gelblich, grössere Blasen | gelblich |
| | Königshärte (14d) | 189 s | n.m. ² | n.m. ² | 182 s |

| | | | | | |
|---|---|---|---|---|---|
| ¹ aus der Aldimin-Bildung ² Blasen verfälschen die Messungen | | | | | |

Aus der Tabelle 2 ist ersichtlich, dass das erfindungsgemässe Beispiel 8 nur wenig mehr als das bei der Reaktion des Benzaldehyds mit den primären Aminogruppen von *PEHA* gebildete Wasser an Gewicht verliert bei der 80 °C-Lagerung. Dieser geringe Gewichtsverlust ist ein deutlicher Hinweis darauf, dass der Benzaldehyd ans ausgehärtete Epoxid-Polymer gebunden ist und deshalb bei 80 °C nicht verdampft. Die Vergleichsbeispiele **9** bis **11** hingegen verlieren bei der 80 °C-Lagerung wesentlich mehr Gewicht. Da der Benzylalkohol nicht ans Epoxid-Polymer gebunden ist, verdampft er zu einem grossen Teil aus den Filmen. Bei den Vergleichsbeispielen **9** und **10**, welche bereits Blasen im Film aufwiesen, wurden diese bei der 80 °C-Lagerung deutlich grösser.

### Vergleichsbeispiele 12 und 13 und Beispiele 14 bis 18

Für jedes der Beispiele wurde separat eine *Harz-Komponente* und eine ***Härter-Komponente*** mit den in der Tabelle 3 angegebenen Inhaltsstoffen in den angegebenen Mengen (in Gewichtsteilen) hergestellt und anschliessend wie für Beispiel 5 beschrieben vermischt. Mit den vermischten Zusammensetzungen wurde jeweils ein Film in einer Schichtdicke von 500 µm auf eine Glasplatte aufgezogen und dieser im NK gelagert, beziehungsweise ausgehärtet. Nach 5 Monaten wurde der Aspekt der Filme und die Königshärte auf dieselbe Weise wie für Beispiel 5 beschrieben bestimmt.

Die Resultate sind in der Tabelle 3 angegeben.

*PEHA-Aldimin-1* wurde folgendermassen hergestellt:
29 Gewichtsteile *PEHA* wurden vorgelegt, unter Rühren 26.5 Gewichtsteile Benzaldehyd zugetropft und anschliessend bei 80 °C und Vakuum während einer Stunde das entstandene Wasser aus der Reaktionsmischung entfernt.

Aus der Tabelle 3 ist ersichtlich, dass die Benzaldehyd-Dosierung der Beispiele **14** bis **16** hoch genug ist, um Blushing-Effekte bei der Aushärtung weitgehend zu verhindern, während die Filme der Beispiele **17** und **18** Anzeichen von leichtem Blushing aufweisen. Weiterhin ist ersichtlich, dass die Filme der Beispiele **15** und **16** die höchsten Härten aufweisen. Die Filme der Beispiele **17** und **18** weisen eine geringere Härte auf, vermutlich ebenfalls aufgrund von leichten Blushing-Effekten.

**Tabelle 3: Zusammensetzung und Eigenschaften der Vergleichsbeispiele 12 und 13 und der Beispiele 14 bis 18.**

| **Beispiel** | | **12 (Vgl.)** | **13 (Vgl.)** | **14** | **15** | **16** | **17** | **18** |
|---|---|---|---|---|---|---|---|---|
| ***Harz-Komponente:*** | | | | | | | | |
| | Araldite^{®} GY-250 | 167.2 | 167.2 | 167.2 | 167.2 | 167.2 | 167.2 | 167.2 |
| | Araldite^{®} DY-E | 31.8 | 31.8 | 31.8 | 31.8 | 31.8 | 31.8 | 31.8 |
| | Benzaldehyd | - | - | 53.0 | 43.4 | 35.4 | 28.5 | 22.7 |

| ***Härter-Komponente:*** | | | | | | | | |
|---|---|---|---|---|---|---|---|---|
| | *PEHA* | - | 58.0 | 58.0 | 52.7 | 48.3 | 44.6 | 41.4 |
| | Benzaldehyd | - | 53.0 | - | - | - | - | - |
| | *PEHA-Aldimin-1* | 102.0 | - | - | - | - | - | - |
| | | | | | | | | |
| Aldehyd / NH₂¹ | | 1.0 | 1.0 | 1.0 | 0.9 | 0.8 | 0.7 | 0.6 |
| Königshärte (5mt) | | 167 s | 171 s | 185 s | 193 s | 197 s | 167 s | 134 s |
| Aspekt | | etwas trüb, etwas klebrig | etwas trüb | fehlerfrei | fehlerfrei | minim trüb | etwas trüb, etwas klebrig | etwas trüb, etwas klebrig |

| | | | | | | | | |
|---|---|---|---|---|---|---|---|---|
| ¹ Verhältnis der Anzahl Aldehydgruppen zur Anzahl der primären Aminogruppen. | | | | | | | | |

Die Vergleichsbeispiele **12** und **13** enthalten Benzaldehyd als Bestandteil der Härter-Komponente anstelle der Harz-Komponente, wobei beim Vergleichsbeispiel **12** das bei der Aldimin-Bildung entstehende Wasser entfernt wurde. Die entsprechenden ausgehärteten Filme sind aber von schlechterer Qualität als der ausgehärtete Film des Beispiels **14**, sowohl was den Aspekt als auch was die Härte betrifft.

### Beispiele 19 bis 24

Für jedes der Beispiele wurde separat eine ***Harz-Komponente*** und eine ***Härter-Komponente*** mit den in der Tabelle 4 angegebenen Inhaltsstoffen in den angegebenen Mengen (in Gewichtsteilen) hergestellt und anschliessend wie für Beispiel 5 beschrieben vermischt. Mit den vermischten Zusammensetzungen wurde jeweils ein Film in einer Schichtdicke von 500 µm auf eine Glasplatte aufgezogen und dieser im NK gelagert, beziehungsweise ausgehärtet. Nach 4 Wochen wurde der Aspekt der Filme und die Königshärte auf dieselbe Weise wie für Beispiel 5 beschrieben bestimmt.

Die Resultate sind in der Tabelle 4 angegeben.

**Tabelle 4: Zusammensetzung und Eigenschaften der Beispiele 19 bis 24.**

| **Beispiel** | | **19** | **20** | **21** | **22** | **23** | **24** |
|---|---|---|---|---|---|---|---|
| ***Harz-Komp.:*** | | | | | | | |
| | Araldite^{®} GY-250 | 167.2 | 167.2 | 167.2 | 187.5 | 187.5 | 167.2 |
| | Araldite^{®} DY-E | 31.8 | 31.8 | 31.8 | - | - | 31.8 |
| | Benzaldehyd | 47.8 | 47.8 | 47.8 | - | - | 17.1 |
| | *LP-Ald* | - | - | - | 71.0 | 47.3 | - |

| ***Härter-Komp.:*** | | | | | | | |
|---|---|---|---|---|---|---|---|
| | *PEHA* | 52.2 | 52.2 | 52.2 | 29.0 | - | - |
| | *IPDA* | 4.25 | - | - | 21.25 | 28.3 | 28.3 |
| | *MXDA* | - | 3.4 | - | - | - | - |
| | Jeffamine^{®} D-230 | - | - | 6.0 | - | 40.0 | 40.0 |
| | Araldite^{®} HY-960 | - | - | - | 6.0 | - | - |
| | | | | | | | |
| Königshärte (4w) | | 164 s | 150 s | 154 s | 161 s | 157 s | 170 s |
| Aspekt | | klar, feine Struktur | fehlerfrei | fehlerfrei | klar, feine Struktur | opak, minime Struktur | klar, feine Struktur |

| | | | | | | | |
|---|---|---|---|---|---|---|---|
| "Komp." steht für "Komponente" | | | | | | | |

Aus der Tabelle 4 ist ersichtlich, dass die Beispiele **19** bis **22**, welche als Härter eine Kombination aus *PEHA* und *IPDA,* beziehungsweise *MXDA,* beziehungsweise Jeffamine^{®} D-230, aufweisen, und bei welchen Benzaldehyd, beziehungsweise *L-Ald,* jeweils stöchiometrisch in Bezug auf die primären Aminogruppen von *PEHA* dosiert ist, zu qualitativ guten Filmen aushärten. Weiterhin ist aus der Tabelle 4 ersichtlich, dass auch die Beispiele **23** und **24**, welche jeweils über eine Härter-Komponente ohne sekundäre Aminogruppen verfügen, zu qualitativ guten Filmen aushärten.

### Beispiele 25 bis 31

Für jedes der Beispiele wurde separat eine ***Harz-Komponente*** und eine ***Härter-Komponente*** mit den in der Tabelle 5 angegebenen Inhaltsstoffen in den angegebenen Mengen (in Gewichtsteilen) hergestellt und anschliessend wie für Beispiel 5 beschrieben vermischt. Mit den vermischten Zusammensetzungen wurde jeweils ein Film in einer Schichtdicke von 500 µm auf eine Glasplatte aufgezogen und dieser im NK gelagert, beziehungsweise ausgehärtet. Nach 5 Monaten wurde der Aspekt der Filme und die Königshärte auf dieselbe Weise wie für Beispiel 5 beschrieben bestimmt.

Die Resultate sind in der Tabelle 5 angegeben.

**Tabelle 5: Zusammensetzung und Eigenschaften der Beispiele 25 bis 31.**

| **Beispiel** | | **25** | **26** | **27** | **28** | **29** | **30** | **31** |
|---|---|---|---|---|---|---|---|---|
| ***Harz-Komp.:*** | | | | | | | | |
| | Araldite^{®} GY-250 | 167.2 | 167.2 | 167.2 | 167.2 | 167.2 | 167.2 | 187.5 |
| | Araldite^{®} DY-E | 31.8 | 31.8 | 31.8 | 31.8 | 31.8 | 31.8 | - |
| | Benzaldehyd | 38.6 | - | - | - | - | - | - |
| | *LP-Ald* | 38.6 | - | - | - | - | - | 142.0 |
| | *EH-Ald* | - | 64.1 | - | - | - | - | - |
| | *PP-Ald* | - | - | 81.0 | - | - | - | - |
| | *AP-Ald* | - | - | - | 72.0 | - | - | - |
| | *MP-Ald* | - | - | - | - | 85.5 | - | - |
| | Salicylaldehyd | - | - | - | - | - | 61.0 | - |

| ***Härter-Komp.:*** | | | | | | | | |
|---|---|---|---|---|---|---|---|---|
| | *PEHA* | 58.0 | 58.0 | 58.0 | 58.0 | 58.0 | 58.0 | 58.0 |
| | | | | | | | | |
| Königshärte (5mt) | | 105 s | 56 s | 145 s | 115 s | 95 s | 220 s | 50 s |
| Aspekt | | fehlerfrei | klar, feine Struktur | fehlerfrei | fehlerfrei | fehlerfrei | fehlerfrei, gelb | fehlerfrei |

| | | | | | | | | |
|---|---|---|---|---|---|---|---|---|
| "Komp." steht für "Komponente" | | | | | | | | |

Aus der Tabelle 5 ist ersichtlich, dass mit unterschiedlichen Aldehyden kombiniert mit *PEHA* Filme von guter Qualität erhalten werden.

### Beispiele 32 bis 35

Für jedes der Beispiele wurde separat eine ***Harz-Komponente*** und eine ***Härter-Komponente*** mit den in der Tabelle 6 angegebenen Inhaltsstoffen in den angegebenen Mengen (in Gewichtsteilen) hergestellt und anschliessend wie für Beispiel 5 beschrieben vermischt. Mit den vermischten Zusammensetzungen wurde jeweils ein Film in einer Schichtdicke von 500 µm auf eine Glasplatte aufgezogen und dieser im NK gelagert, beziehungsweise ausgehärtet. Nach 4 Wochen wurde der Aspekt der Filme und die Königshärte auf dieselbe Weise wie für Beispiel 5 beschrieben bestimmt.

Die Resultate sind in der Tabelle 6 angegeben.

Das *Addukt 1* wurde folgendermassen hergestellt:
36.8 g *N4-Amin* wurden mit 13.2 g Araldite^{®} GY-250 vermischt und 2 Stunden bei 60 °C belassen. Es bildete sich eine klare Flüssigkeit mit einer Viskosität bei 20 °C von 1.1 Pa·s.

Das *Addukt* 2 wurde folgendermassen hergestellt:
20.0 g *Addukt 1* wurden mit 11.2 g Benzaldehyd vermischt. Es bildete sich eine klare Flüssigkeit mit einer Viskosität bei 20 °C von 76.8 Pa·s.

Das *Addukt* 3 wurde folgendermassen hergestellt:
10.26 g *TEPA* und 19.55 g Jeffamine^{®} D-230 wurden mit 10.18 g Araldite^{®} GY-250 vermischt und 2 Stunden bei 60 °C belassen. Es bildete sich eine klare Flüssigkeit mit einer Viskosität bei 20 °C von 3.5 Pa.s.

Aus der Tabelle 6 ist ersichtlich, dass Zusammensetzungen, welche als Polyamin **A1** ein Amin/Polyepoxid-Addukt mit primären und sekundären Aminogruppen enthalten, zu qualitativ guten Filmen mit kaum Blushing aushärten.

**Tabelle 6: Zusammensetzung und Eigenschaften der Beispiele 32 bis 35.**

| **Beispiel** | | **32** | **33** | **34** | **35** |
|---|---|---|---|---|---|
| ***Harz-Komponente:*** | | | | | |
| | Araldite^{®} GY-250 | 167.2 | 187.5 | 187.5 | 187.5 |
| | Araldite^{®} DY-E | 31.8 | - | - | - |
| | Benzaldehyd | 75.8 | 56.9 | - | - |
| | *LP-Ald* | - | 50.7 | 50.7 | 28.4 |

| ***Härter-Komponente:*** | | | | | |
|---|---|---|---|---|---|
| | *Addukt 1* | 101.4 | 101.4 | - | - |
| | *Addukt 2* | - | - | 158.3 | - |
| | *Addukt 3* | - | - | - | 73.7 |
| | | | | | |
| Königshärte (4w) | | 195 s | 172 s | 154 s | 200 s |
| Aspekt | | fehlerfrei | fehlerfrei | klar, feine Struktur | minim trüb |

### Beispiel 36

Mit der Zusammensetzung des Beispiels 5 wurde 6 mal jeweils ein Film in einer Schichtdicke von 500 µm auf eine Glasplatte aufgezogen und diese Platten bei unterschiedlichen Bedingungen, wie nachfolgend beschrieben, gelagert.

Die Platte Nr. 1 wurden 21 Tage im NK gelagert (in der Tabelle 7 mit "*NK*" bezeichnet).

Die Platte Nr. 2 wurde 11 Tage im NK, dann 7 Tage eingetaucht in Wasser, und dann nochmals 3 Tage im NK gelagert (in der Tabelle 7 mit "*NK,* H₂O" bezeichnet).

Die Platte Nr. 3 wurde 11 Tage im NK, dann 7 Tage bei 70 °C und 100 % relativer Feuchtigkeit, und dann nochmals 3 Tage im NK gelagert (in der Tabelle 7 mit *"NK, 70*/*100"* bezeichnet).

Die Platte Nr. 4 wurde 4 Tage im NK, dann 7 Tage in einem Umluftofen bei 80 °C, und dann nochmals 10 Tage im NK gelagert (in der Tabelle 7 mit "80°C" bezeichnet).

Die Platten Nr. 5 wurden 4 Tage im NK, dann 7 Tage in einem Umluftofen bei 80 °C, dann 7 Tage eingetaucht in Wasser, und dann nochmals 3 Tage im NK gelagert (in der Tabelle 7 mit "80°C, *H₂O*" bezeichnet).

Die Platte Nr. 6 wurde 4 Tage im NK, dann 7 Tage in einem Umluftofen bei 80 °C, dann 7 Tage bei 70 °C und 100 % relativer Luftfeuchtigkeit, und dann nochmals 3 Tage im NK gelagert (in der Tabelle 7 mit "80°C, *70*/*100"* bezeichnet).

Alle Platten wurden direkt nach der Applikation der Zusammensetzung gewogen, dann wie beschrieben gelagert, und anschliessend durch erneutes Wägen der Gewichtsverlust gemessen sowie auf dieselbe Weise wie für Beispiel 5 beschrieben der Aspekt und die Königshärte bestimmt.

Die Resultate sind in der Tabelle 7 angegeben.

**Tabelle 7: Resultate des Beispiels 36.**

| **Platte** | **Nr.1** | **Nr. 2** | **Nr. 3** | **Nr. 4** | **Nr. 5** | **Nr. 6** |
|---|---|---|---|---|---|---|
| Lagerung | *NK* | *NK,* H₂O | *NK, 70*/*100* | *80°C* | *80°C,* H₂O | *80°C,* 70/100 |
| Gewichtsverlust | 1.5 % | 0.5 % | 2.8 % | 3.4 % | 2.8 % | 3.7 % |
| Königshärte | 155 s | 153 s | 167 s | 189 s | 177 s | 188 s |
| Aspekt | ff | ff | ff | gm | gm | gm |

| | | | | | | |
|---|---|---|---|---|---|---|
| "ff" steht für "fehlerfrei" "gm" steht für "gelb, etwas matt" | | | | | | |

Aus der Tabelle 7 ist ersichtlich, dass eine Lagerung für 7 Tage im Wasser, beziehungsweise bei 70°C und 100% relativer Luftfeuchtigkeit, die Eigenschaften der ausgehärteten Zusammensetzung nicht wesentlich beeinflussen. Insbesondere ist ersichtlich, dass auch in nasser, beziehungsweise feuchtwarmer, Umgebung Benzaldehyd nicht in wesentlichem Ausmass aus der ausgehärteten Zusammensetzung freigesetzt wurde.

### Beispiele 37 und 38 und Vergleichsbeispiele 39 und 40

Für jedes der Beispiele wurde eine ***Harz-Komponente*** mit den in der Tabelle 8 angegebenen Inhaltsstoffen in den angegebenen Mengen (in Gewichtsteilen) hergestellt und anschliessend die Viskosität bestimmt.

Die Resultate sind in der Tabelle 8 angegeben.

**Tabelle 8: Zusammensetzung und Viskosität der Beispiele 37 und 38 und der Vergleichsbeispiele 39 und 40.**

| **Beispiel** | **37** | **38** | **39 (Vergleich)** | **40 (Vergleich)** |
|---|---|---|---|---|
| Araldite^{®} GY-250 | 80 | 80 | 80 | 100 |
| Benzylalkohol | - | - | 20 | - |
| Benzaldehyd | 20 | - | - | - |
| *LP-Ald* | - | 20 | - | - |
| | | | | |
| Viskosität bei 20 °C | 0.5 Pa·s | 1.2 Pa·s | 0.7 Pa·s | 18.6 Pa·s |

Aus der Tabelle 8 ist ersichtlich, dass sowohl Benzaldehyd als auch *LP-Ald* das Epoxidharz Araldite^{®} GY-250 ähnlich gut oder sogar besser verdünnen wie Benzylalkohol.

### Beispiele 41 bis 43 und Vergleichsbeispiele 44 und 45

Für jedes der Beispiele wurde eine ***Harz-Komponente*** mit den in der Tabelle 9 angegebenen Inhaltsstoffen in den angegebenen Mengen (in Gewichtsteilen) hergestellt, anschliessend von jeder Zusammensetzung die Viskosität bei 20 °C gemessen (in der Tabelle 9 mit "Visk. (*Start*)" bezeichnet) und dann jede Zusammensetzung in jeweils zwei Aluminiumtuben abgefüllt und luftdicht verschlossen.

Jeweils eine der Tuben wurde während 7 Tagen bei 20 °gelagert und anschliessend die Viskosität bei 20 °C gemessen (in der Tabelle 9 mit "Visk. *(7d 20°C*)" bezeichnet).

Die zweite Tube wurde während 7 Tagen bei 60 °C aufbewahrt und anschliessend jeweils die Viskosität bei 20 °C gemessen (in der Tabelle 9 mit "Visk. (*7d* 60°C)" bezeichnet).

Die Resultate sind in der Tabelle 9 angegeben.

Aus der Tabelle 9 ist ersichtlich, dass alle geprüften Harz-Komponenten (Beispiele **41** bis **43** und Vergleichsbeispiele **44** und **45**) keine messbare Viskositätserhöhung bei der Lagerung während 7 Tagen bei Raumtemperatur, beziehungsweise nur eine geringe Viskositätserhöhung bei der Lagerung während 7 Tagen bei 60 °C, aufwiesen.

**Tabelle 9: Zusammensetzung und Eigenschaften der Beispiele 41 bis 43 und der Vergleichsbeispiele 44 und 45.**

| **Beispiel** | **41** | **42** | **43** | **44 (Vergleich)** | **45 (Vergleich)** |
|---|---|---|---|---|---|
| Araldite^{®} GY-250 | 167.2 | 167.2 | 187.5 | 167.2 | 167.2 |
| Araldite^{®} DY-E | 31.8 | 31.8 | - | 31.8 | 31.8 |
| Benzaldehyd | 53.0 | - | - | - | - |
| Salicylaldehyd | - | 61.0 | - | - | - |
| *LP-Ald* | - | - | 50.7 | - | - |
| Benzylalkohol | - | - | - | 50.0 | - |
| | | | | | |
| Visk. (*Start*) [mPa·s] | 195 | 205 | 1200 | 230 | 1020 |
| Visk. (*7d 20°C* [mPa·s] | 195 | 205 | 1200 | 230 | 1020 |
| Visk. (*7d 60°C*)[mPa·s] | 210 | 225 | 1250 | 245 | 1100 |

## Patentansprüche

1. Zweikomponentige Epoxidharz-Zusammensetzung, bestehend aus einer Harz-Komponente **K1,** welche mindestens ein Epoxidharz und mindestens einen Aldehyd enthält, und
einer Härter-Komponente **K2,** welche mindestens ein Polyamin **A1** mit mindestens einer primären Aminogruppe enthält,
wobei der Aldehyd ausgewählt ist aus der Gruppe bestehend aus Propanal, 2-Methylpropanal, Butanal, 2-Methyl-butanal, 2-Ethylbutanal, Pentanal, Pivalaldehyd, 2-Methylpentanal, 3-Methyl-pentanal, 4-Methylpentanal, 2,3-Dimethylpentanal, Hexanal, 2-Ethyl-hexanal, Heptanal, Octanal, Nonanal, Decanal, Undecanal, 2-Methyl-un-deca-nal, Do-decanal, Methoxy-acet-aldehyd, Cyclopropan-carboxaldehyd, Cyclo-pen-tan-car-boxaldehyd, Cyclo-hexan-carbox-aldehyd, 2,2-Dimethyl-3-phenylpropa-nal; 1-Naphthaldehyd, Benzaldehyd, substituierte Benzaldehyde, Zimtaldehyd und Aldehyden der Formel (II) 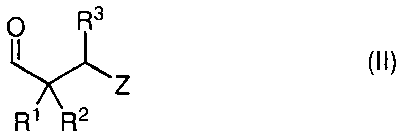 wobei R¹ und R²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen stehen, der Teil eines carbocyclischen Rings mit 5 bis 8 C-Atomen ist;
R³ für ein Wasserstoffatom oder für eine Arylalkyl- oder Cycloalkyl- oder Alkylgruppe mit 1 bis 12 C-Atomen steht; und
Z für eine Ester-, Ether-, tertiäre Amino- oder Amidogruppe mit bis zu 31 C-Atomen steht.

2. Zweikomponentige Epoxidharz-Zusammensetzung gemäss Anspruch 1, **dadurch gekennzeichnet, dass** Z für einen Rest der Formel (III) oder (IV) steht, 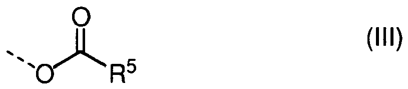 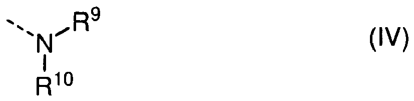 wobei R⁵
entweder für ein Wasserstoffatom steht,
oder für einen linearen oder verzweigten Alkylrest mit 1 bis 30 C-Atomen steht,
oder für einen einfach oder mehrfach ungesättigten, linearen oder verzweigten Kohlenwasserstoffrest mit 5 bis 30 C-Atomen steht,
oder für einen aromatischen oder heteroaromatischen 5- oder 6-gliedrigen Ring steht;
R⁹ und R¹⁰
entweder unabhängig voneinander jeweils für einen einwertigen aliphatischen, cycloaliphatischen oder arylaliphatischen Rest mit 1 bis 20 C-Atomen stehen,
oder zusammen für einen zweiwertigen aliphatischen Rest mit 3 bis 20 C-Atomen, der Teil eines heterocyclischen Rings mit 5 bis 8 Ringatomen ist, stehen.

3. Zweikomponentige Epoxidharz-Zusammensetzung gemäss Anspruch 1 oder 2, **dadurch gekennzeichnet, dass** R¹ und R² jeweils für einen Methylrest stehen.

4. Zweikomponentige Epoxidharz-Zusammensetzung gemäss Anspruch 2 oder 3, **dadurch gekennzeichnet, dass** R⁵ 11 bis 30 C-Atome aufweist.

5. Zweikomponentige Epoxidharz-Zusammensetzung gemäss einem der vorhergehenden Ansprüche, **dadurch gekennzeichnet, dass** der Aldehyd ausgewählt ist aus der Gruppe bestehend aus Benzaldehyd, Salicylaldehyd, 2,2-Dimethyl-3-phenylpropanal, 3-Acetoxy-2,2-dimethylpropanal, 2,2-Dimethyl-3-lauroyloxypropanal und 2,2-Dimethyl-3-(N-morpholino)-propanal.

6. Zweikomponentige Epoxidharz-Zusammensetzung gemäss einem der vorhergehenden Ansprüche, **dadurch gekennzeichnet, dass** die Harz-Komponente **K1** einen Gehalt an Aldehyd von mindestens 1 Gewichts-% aufweist.

7. Zweikomponentige Epoxidharz-Zusammensetzung gemäss einem der vorhergehenden Ansprüche, **dadurch gekennzeichnet, dass** das Epoxidharz ein Flüssigharz auf der Basis eines Bisphenols ist.

8. Zweikomponentige Epoxidharz-Zusammensetzung gemäss einem der vorhergehenden Ansprüche, **dadurch gekennzeichnet, dass** das Polyamin **A1** ein Polyamin **A2** ist, wobei das Polyamin **A2** mindestens eine primäre und mindestens zwei sekundäre Aminogruppen aufweist.

9. Zweikomponentige Epoxidharz-Zusammensetzung gemäss Anspruch 8, **dadurch gekennzeichnet, dass** das Polyamin **A2** ausgewählt ist aus der Gruppe bestehend aus
Triethylentetramin (TETA), Tetraethylenpentamin (TEPA), Pentaethylenhexamin (PEHA), Polyethylenpolyamin mit 5 bis 7 Ethylenamin-Einheiten (HEPA), N,N'-Bis(3-aminopropyl)ethylendiamin;
Addukten von Diethylentriamin (DETA), Dipropylentriamin (DPTA), Bis-hexamethylentriamin (BHMT), Triethylentetramin (TETA), Tetraethylenpentamin (TEPA), Pentaethylenhexamin (PEHA), Polyethylenpolyamin mit 5 bis 7 Ethylenamin-Einheiten (HEPA) oder N,N'-Bis(3-aminopropyl)ethylendiamin mit einem Diglycidylether und Polyamidoaminen.

10. Zweikomponentige Epoxidharz-Zusammensetzung gemäss einem der vorhergehenden Ansprüche, **dadurch gekennzeichnet, dass** das Verhältnis der Anzahl Aldehydgruppen in der Harz-Komponente **K1** in Bezug auf die Anzahl primäre Aminogruppen in der Härter-Komponente **K2** im Bereich von 0.1 bis 1.1 liegt.

11. Ausgehärtete Zusammensetzung, welche durch das Vermischen der Harz-Komponente **K1** und der Härter-Komponente **K2** einer zweikomponentigen Epoxidharz-Zusammensetzung gemäss einem der Ansprüche 1 bis 10 erhalten wird.

12. Verwendung einer zweikomponentigen Epoxidharz-Zusammensetzung gemäss einem der Ansprüche 1 bis 10 als Beschichtung, Bodenbelag, Anstrich, Lack, Primer oder Grundierung, sowie als Klebstoff, Dichtstoff oder Vergussmasse.

13. Verwendung eines Aldehyds zur Verdünnung eines Epoxidharzes oder einer Epoxidharz-Zusammensetzung,
wobei der Aldehyd ausgewählt ist aus der Gruppe bestehend aus Propanal, 2-Methylpropanal, Butanal, 2-Methyl-butanal, 2-Ethylbutanal, Pentanal, Pivalaldehyd, 2-Methylpentanal, 3-Methyl-pentanal, 4-Methylpentanal, 2,3-Dimethylpentanal, Hexanal, 2-Ethyl-hexanal, Heptanal, Octanal, Nonanal, Decanal, Undecanal, 2-Methyl-un-deca-nal, Do-decanal, Methoxy-acet-aldehyd, Cyclopropan-carboxaldehyd, Cyclo-pen-tan-car-boxaldehyd, Cyclo-hexan-carbox-aldehyd, 2,2-Dimethyl-3-phenylpropa-nal; 1-Naphthaldehyd, Benzaldehyd, substituierte Benzaldehyde, Zimtaldehyd und Aldehyden der Formel (II) 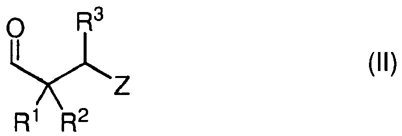 wobei R¹ und R²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen stehen, der Teil eines carbocyclischen Rings mit 5 bis 8 C-Atomen ist;
R³ für ein Wasserstoffatom oder für eine Arylalkyl- oder Cycloalkyl- oder Alkylgruppe mit 1 bis 12 C-Atomen steht; und
Z für eine Ester-, Ether-, tertiäre Amino- oder Amidogruppe mit bis zu 31 C-Atomen steht.

14. Verfahren zur Verringerung von Blushing-Effekten bei der Aushärtung einer zweikomponentigen Epoxidharz-Zusammensetzung deren Härter-Komponente mindestens ein Polyamin mit mindestens einer primären Aminogruppe enthält, indem der Harz-Komponente ein Aldehyd zugegeben wird, wobei der Aldehyd ausgewählt ist aus der Gruppe bestehend aus Propanal, 2-Methylpropanal, Butanal, 2-Methyl-butanal, 2-Ethylbutanal, Pentanal, Pivalaldehyd, 2-Methylpentanal, 3-Methyl-pentanal, 4-Methylpentanal, 2,3-Dimethylpentanal, Hexanal, 2-Ethyl-hexanal, Heptanal, Octanal, Nonanal, Decanal, Undecanal, 2-Methyl-un-deca-nal, Do-decanal, Methoxy-acet-aldehyd, Cyclopropan-carboxaldehyd, Cyclo-pen-tan-car-boxaldehyd, Cyclo-hexan-carbox-aldehyd, 2,2-Dimethyl-3-phenylpropa-nal; 1-Naphthaldehyd, Benzaldehyd, substituierte Benzaldehyde, Zimtaldehyd und Aldehyden der Formel (II) 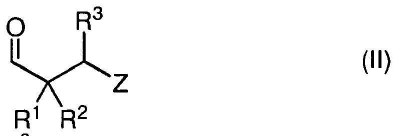 wobei R¹ und R²
entweder unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen stehen, der Teil eines carbocyclischen Rings mit 5 bis 8 C-Atomen ist;
R³ für ein Wasserstoffatom oder für eine Arylalkyl- oder Cycloalkyl- oder Alkylgruppe mit 1 bis 12 C-Atomen steht; und
Z für eine Ester-, Ether-, tertiäre Amino- oder Amidogruppe mit bis zu 31 C-Atomen steht.

## Claims

1. Two-component epoxy resin composition consisting of a resin component **K1** which comprises at least one epoxy resin and at least one aldehyde, and
a hardener component **K2** which comprises at least one polyamine **A1** having at least one primary amino group, where the aldehyde is selected from the group consisting of propanal, 2-methylpropanal, butanal, 2-methylbutanal, 2-ethylbutanal, pentanal, pivalaldehyde, 2-methylpentanal, 3-methylpentanal, 4-methylpentanal, 2,3-dimethylpentanal, hexanal, 2-ethylhexanal, heptanal, octanal, nonanal, decanal, undecanal, 2-methyl-undecanal, dodecanal, methoxyacetaldehyde, cyclopropanecarboxaldehyde, cyclopentanecarboxaldehyde, cyclohexanecarboxaldehyde, 2,2-dimethyl-3-phenylpropanal, 1-naphthaldehyde, benzaldehyde, substituted benzaldehyde, cinnamic aldehyde and aldehydes of formula (II 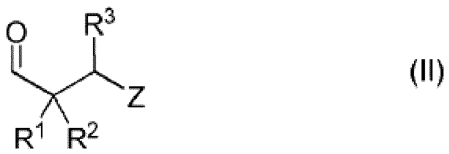 where R¹ and R²
in each case stand, independently of each other, either for a monovalent hydrocarbon residue having 1-12 C atoms,
or together for a bivalent hydrocarbon residue having 4-12 C atoms, which is part of an carbocyclic ring having 5-8C atoms;
R³ stands for a hydrogen atom or for an arylalkyl or cycloalkyl or alkyl group having 1-12 C atoms; and
Z stands for an ester, ether, tertiary amino or amido group having up to 31 C atoms.

2. Two-component epoxy resin composition according to Claim 1, **characterized in that** Z stands for a residue of formula (III) or (IV), 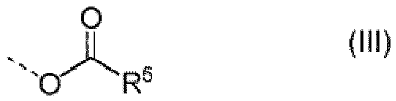 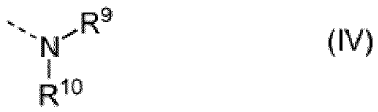 where R⁵
stands either for a hydrogen atom
or for a linear or branched alkyl residue having 1-30 C atoms,
or for a singly or multiply unsaturated, linear or branched hydrocarbon residue having 5-30 C atoms,
or for an aromatic or heteroaromatic, 5- or 6-membered ring; and
R⁹ and R¹⁰,
independently of each other, in each case stand either for a monovalent aliphatic, cycloaliphatic or arylaliphatic residue having 1-20 C atoms,
or together they stand for a bivalent aliphatic residue having 3-20 C atoms, which is part of an heterocyclic ring having 5-8 ring atoms.

3. Two-component epoxy resin composition according to Claim 1, **characterized in that** R¹ and R² each stand for a methyl residue.

4. Two-component epoxy resin composition according to Claim 2 or 3, **characterized in that** R⁵ has 11-30 C atoms, particularly 11-20 C atoms.

5. Two-component epoxy resin composition according to one of the previous claims, **characterized in that** the aldehyde is selected from the group consisting of benzaldehyde, salicylaldehyde, 2,2-dimethyl-3-phenylpropanal, 3-acetoxy-2,2-dimethylpropanal, 2,2-dimethyl-3-lauroyloxypropanal, and 2,2-dimethyl-3-(N-morpholino)-propanal.

6. Two-component epoxy resin composition according to one of the previous claims, **characterized in that** the resin component **K1** has an aldehyde content of at least 1 wt%.

7. Two-component epoxy resin composition according to one of the previous claims, **characterized in that** the epoxy resin is a liquid resin based on a bisphenol.

8. Two-component epoxy resin composition according to one of the previous claims, **characterized in that** the polyamine **A1** is a polyamine **A2,** where the polyamine **A2** has at least one primary and at least two secondary amino groups.

9. Two-component epoxy resin composition according to Claim 8, **characterized in that** the polyamine **A2** is selected from the group consisting of
triethylenetetramine (TETA), tetraethylenepentamine (TEPA), pentaethylenehexamine (PEHA), polyethylenepolyamine having 5-7 ethyleneamine units (HEPA), N,N'-bis(3-aminopropyl)ethylenediamine;
adducts of diethylenetriamine (DETA), dipropylenetriamine (DPTA), bishexamethylenetriamine (BHMT), triethylenetetramine (TETA), tetraethylenepentamine (TEPA), pentaethylenehexamine (PEHA), polyethylenepolyamine having 5-7 ethyleneamine units (HEPA) or N,N'-bis(3-aminopropyl)ethylenediamine with a diglycidyl ether; and polyamidoamines.

10. Two-component epoxy resin composition according to one of the previous claims, **characterized in that** the ratio of the number of aldehyde groups in the resin component **K1** to the number of primary amino groups in the hardener component **K2** is in the range from 0.1 to 1.1.

11. Cured composition which is obtained by mixing the resin component **K1** and the hardener component **K2** of a two-component epoxy resin composition according to one of Claims 1-10.

12. Use of a two-component epoxy resin composition according to one of Claims 1-10 as a coating, floor cover, paint, lacquer, primer or base coat, and as adhesive, sealant or casting composition.

13. Use of an aldehyde for diluting an epoxy resin or an epoxy resin composition where the aldehyde is selected from a group consisting of
the aldehyde is selected from the group consisting of propanal, 2-methylpropanal, butanal, 2-methylbutanal, 2-ethylbutanal, pentanal, pivalaldehyde, 2-methylpentanal, 3-methylpentanal, 4-methylpentanal, 2,3-dimethylpentanal, hexanal, 2-ethylhexanal, heptanal, octanal, nonanal, decanal, undecanal, 2-methyl-undecanal, dodecanal, methoxyacetaldehyde, cyclopropanecarboxaldehyde, cyclopentanecarboxaldehyde, cyclohexanecarboxaldehyde, 2,2-dimethyl-3-phenylpropanal" 1-naphthaldehyde, benzaldehyde, substituted benzaldehyde, cinnamic aldehyde and aldehydes of formula (II) 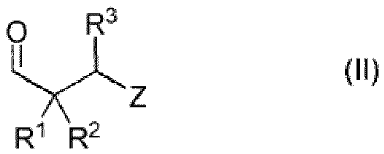 where R¹ and R²
in each case stand, independently of each other, either for a monovalent hydrocarbon residue having 1-12 C atoms,
or together for a bivalent hydrocarbon residue having 4-12 C atoms, which is part of an carbocyclic ring having 5-8 C atoms;
R³ stands for a hydrogen atom or for an arylalkyl or cycloalkyl or alkyl group having 1-12 C atoms; and
Z stands for an ester, ether, tertiary amino or amido group having up to 31 C atoms.

14. Method for reducing blushing effects during the curing of a two-component epoxy resin composition whose hardener component comprises at least one polyamine having at least one primary amino group, by adding an aldehyde to the resin component,
where the aldehyde is selected from a group consisting of
the aldehyde is selected from the group consisting of propanal, 2-methylpropanal, butanal, 2-methylbutanal, 2-ethylbutanal, pentanal, pivalaldehyde, 2-methylpentanal, 3-methylpentanal, 4-methylpentanal, 2,3-dimethylpentanal, hexanal, 2-ethylhexanal, heptanal, octanal, nonanal, decanal, undecanal, 2-methyl-undecanal, dodecanal, methoxyacetaldehyde, cyclopropanecarboxaldehyde, cyclopentanecarboxaldehyde, cyclohexanecarboxaldehyde, 2,2-dimethyl-3-phenylpropanal" 1-naphthaldehyde, benzaldehyde, substituted benzaldehyde, cinnamic aldehyde and aldehydes of formula (II), 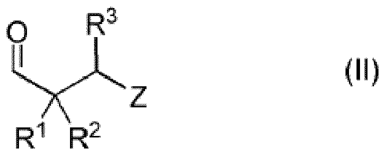 where R¹ and R²
in each case stand, independently of each other, either for a monovalent hydrocarbon residue having 1-12 C atoms,
or together stand for a bivalent hydrocarbon residue having 4-12 C atoms, which is part of an carbocyclic ring having 5-8 C atoms;
R³ stands for a hydrogen atom or for an arylalkyl or cycloalkyl or alkyl group having 1-12 C atoms; and
Z stands for an ester, ether, tertiary amino or amido group having up to 31 C atoms.

## Revendications

1. Composition de résine époxyde à deux composants, comportant un composant résine K1 contenant au minimum une résine époxyde et au minimum un aldéhyde, et un composant durcisseur K2 contenant au minimum une polyamine A1 avec au moins un groupe amine primaire et pour lequel l'aldéhyde est choisi dans le groupe se composant du propanal, 2-méthylpropanal, butanal, 2-méthylbutanal, 2-éthylbutanal, pentanal, pivalaldéhyde, 2-méthylpentanal, 3-méthylpentanal, 4-méthylpentanal, 2,3-diméthylpentanal, hexanal, 2-éthylhexanal, heptanal, octanal, nonanal, decanal, undecanal, 2-méthylundecanal, dodecanal, méthoxy-acétaldéhyde, cyclopropane-carboxaldéhyde, cyclo-pentane-carboxaldéhyde, cyclohexa,carboxaldéhyde, 2,2-diméthyl-3-phénylpropanal; 1-naphthaldéhyde, benzaldéhyde, benzaldéhydes substitués, zimtaldéhyde et aldéhydes de la formule (II) 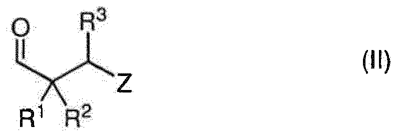 ou R¹ et R²
représentent soit, indépendamment l'un de l'autre, un résidu hydrocarbure monovalent comportant 1 à 12 atomes de carbone, ou, ensemble, un résidu hydrocarbure bivalent comportant 4 à 12 atomes de carbone qui soit une partie d'un anneau carbocyclique comportant 5 à 8 atomes de carbone ;
R³ représente un atome d'hydrogène ou un groupe arylalkyle ou cycloalkyle ou alkyle comportant 1 à 12 atomes de carbone ; et Z pour un groupe ester, ether ou amino ou amido tertiaire comportant jusqu'à 31 atomes de carbone.

2. Composition de résine époxyde selon revendication 1, **caractérisée par le fait que** Z représente un résidu de la formule (III) ou (IV), 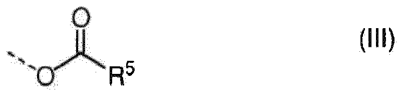 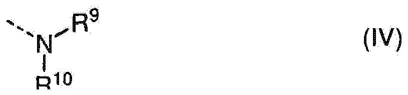 ou R⁵ représente soit un atome d'hydrogène, soit un résidu alkyle linéaire ou ramifié comportant 1 à 30 atomes de carbone,
ou pour un résidu hydrocarbure linéaire ou ramifié, mono ou polyinsaturé, comportant 5 à 10 atomes de carbone ou pour un anneau aromatique ou hétéro-aromatique de 5 ou 6 membres ;
R⁹ et R¹⁰ représentent, indépendamment l'un de l'autre, chacun un résidu monovalent aliphatique, cycloaliphatique ou arylaliphatique comportant 1 à 20 atomes de carbone, ou ensemble pour un résidu aliphatique bivalent comportant 3 à 20 atomes de carbone qui soit partie d'un anneau hétérocyclique comportant 5 à 8 atomes anneaux.

3. Composition de résine époxyde à deux composants selon revendication 1 ou 2, **caractérisée par le fait que** R¹ et R² représentent chacun un résidu méthyle.

4. Composition de résine époxyde à deux composants selon revendication 2 ou 3, **caractérisée par le fait que** R⁵ comporte 11 à 30 atomes de carbone.

5. Composition de résine époxyde selon l'une des revendications précédentes, **caractérisée par le fait que** l'aldéhyde est choisi dans le groupe composé du benzalaldéhyde, salicylaldéhyde, 2,2-diméthyl-3-phénylpropanal, 3-acetoxy-2,2 diméthylpropanal, 2,2-diméthyl-3-lauroyloxypropanal et 2,2-diméthyl-3-(N-morpholino)-propanal.

6. Composition de résine époxyde à deux composants selon l'une des revendications précédentes, **caractérisée par le fait que** le composant résine K1 présente une teneur en aldéhyde d'au moins 1% du poids.

7. Composition de résine époxyde à deux composants selon l'une des revendications précédentes, **caractérisée par le fait que** la résine époxyde est une résine liquide sur la base d'un bisphénol.

8. Composition de résine époxyde à deux composants selon l'une des revendications précédentes, **caractérisée par le fait que** la polyamine A1 est une polyamine A2, la polyamine A2 présentant au moins un groupe amine primaire et deux groupes amines secondaires.

9. Composition de résine époxyde à deux composants selon revendication 8, **caractérisée par le fait que** la polyamine A2 est choisie dans le groupe composé du triéthylène tétramine (TETA), tétraéthylène pentamine (TEPA), pentaéthylène hexamine (PEHA), polyéthylène polyamine avec de 5 à 7 unités d'éthylène amine (HEPA), N,N'-bis(3-aminopropyle) éthylène diamine ; adduits de diéthylène triamine (DETA), dipropylène triamine (DPTA), bis-hexaméthylène triamine (BHMT), triéthylène tétramine (TETA), tétraéthylène pentamine (TEPA), pentaéthylène hexamine (PEHA), polyéthylène polyamine avec de 5 à 7 d'éthyle amine (HEPA) ou N,N'-Bis(3-aminopropyle) éthylène diamine avec un diglycidylether et des polyamidoamines.

10. Composition de résine époxyde à deux composants selon l'une des revendications précédentes, **caractérisée par le fait que** le rapport du nombre de groupes aldéhydes dans le composant résine K1 sur le nombre de groupes amines primaires dans le composant durcisseur K2 se situe dans la plage de 0.1 à 1.1.

11. Composition durcie obtenue par le mélange du composant résine K1 et du composant durcisseur K2 d'une composition de résine époxyde à deux composants selon l'une des revendications de 1 à 10.

12. Utilisation d'une composition de résine époxyde à deux composants selon l'une des revendications de 1 à 10 sous forme d'enduit, de revêtement de sol, de peinture, de laque, de couche de fond ou d'apprêt ainsi que sous la forme de colle, de matériau d'étanchéisation ou de masse de remplissage.

13. Utilisation d'un aldéhyde pour la dilution d'une résine époxyde ou d'une composition de résine époxyde, pour lequel l'aldéhyde est choisi dans le groupe se composant du propanal, 2-méthylpropanal, butanal, 2-méthylbutanal, 2-éthylbutanal, pentanal, pivalaldéhyde, 2-méthylpentanal, 3-méthylpentanal, 4-méthylpentanal, 2,3-diméthylpentanal, hexanal, 2-éthylhexanal, heptanal, octanal, nonanal, decanal, undecanal, 2-méthylundecanal, dodecanal, méthoxy-acétaldéhyde, cyclopropane-carboxaldéhyde, cyclopentancarboxaldéhyde, cyclohexane-carboxaldéhyde, 2,2-diméthyl-3-phénylpropanal; 1-naphthaldéhyde, benzaldéhyde, benzaldéhydes substitués, zimtaldéhyde et aldéhydes de la formule (II) 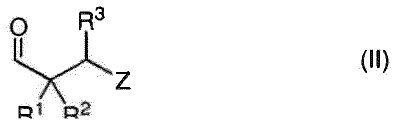 ou R¹ et R²
représentent soit, indépendamment l'un de l'autre, un résidu hydrocarbure monovalent comportant de 1 à 12 atomes de carbone, ou, ensemble, un résidu hydrocarbure bivalent comportant de 4 à 12 atomes de carbone qui soit une partie d'un anneau carbocyclique comportant 5 à 8 atomes de carbone ;
R³ représente un atome d'hydrogène ou un groupe arylalkyle ou cycloalkyle ou alkyle comportant 1 à 12 atomes de carbone ; et
Z pour un groupe ester, ether ou amino ou amido tertiaire comportant jusqu'à 31 atomes de carbone.

14. Processus de réduction des effets blush lors du durcissement d'une composition de résine époxyde à deux composants dont le durcisseur contient au minimum une polyamine avec au moins un groupe amine primaire en ajoutant au composant résine un aldéhyde choisi dans le groupe se composant du propanal, 2-méthylpropanal, butanal, 2-méthylbutanal, 2-éthylbutanal, pentanal, pivalaldéhyde, 2-méthylpentanal, 3-méthylpentanal, 4-méthylpentanal, 2,3-diméthylpentanal, hexanal, 2-éthylhexanal, heptanal, octanal, nonanal, decanal, undecanal, 2-méthylundecanal, dodecanal, méthoxy-acétaldéhyde, cyclopropane-carboxaldéhyde, cyclopentancarboxaldéhyde, cyclohexane-carboxaldéhyde, 2,2-diméthyl-3-phenylpropanal; 1-naphthaldéhyde, benzaldéhyde, benzaldéhydes substitués, zimtaldéhyde et aldéhydes de la formule (II) 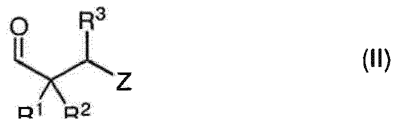 ou R¹ et R²
représentent soit, indépendamment l'un de l'autre, un résidu hydrocarbure monovalent comportant 1 à 12 atomes de carbone, ou, ensemble, un résidu hydrocarbure bivalent comportant 4 à 12 atomes de carbone qui soit une partie d'un anneau carbocyclique comportant 5 à 8 atomes de carbone ;
R³ représente un atome d'hydrogène ou un groupe arylalkyle ou cycloalkyle ou alkyle comportant 1 à 12 atomes de carbone ; et
Z pour un groupe ester, ether ou amino ou amido tertiaire comportant jusqu'à 31 atomes de carbone.
